# EUROPEAN PATENT APPLICATION

(11) **EP 4 615 002 A1**
(43) Date of publication of application: **10.09.2025**
(21) Application number: 23905441.4
(22) Date of filing: 25.10.2023
(51) Int. Cl.: H04R 3/00

(54) **AUDIO CIRCUIT AND CONTROL METHOD THEREFOR, ELECTRONIC DEVICE, AND AUDIO SYSTEM**

(30) Priority: 21.12.2022 CN 202211648946
(71) Applicant: Honor Device Co., Ltd., Shenzhen, Guangdong 518040 (CN)
(72) Inventor: WEN, Yulei, Shenzhen, Guangdong 518040 (CN); WANG, Huiwen, Shenzhen, Guangdong 518040 (CN); MA, Baijie, Shenzhen, Guangdong 518040 (CN); TONG, Wei, Shenzhen, Guangdong 518040 (CN); CHEN, Dongbo, Shenzhen, Guangdong 518040 (CN)
(74) Representative: Isarpatent
(86) International application number: PCT/CN2023/126613
(87) International publication number: WO 2024/131269

(57) **Abstract**

Embodiments of this application provide an audio circuit and a control method therefor, an electronic device, and an audio system, which are applied to the field of electronic technologies. According to the audio circuit, when no earphone is inserted into a earphone jack, a first bias voltage terminal provides a first bias voltage to a first microphone, so that the first microphone collects a first audio signal. In this case, the first audio signal is transmitted to an audio processing module. When a earphone including a second microphone is inserted into the earphone jack, a pull-up module provides a second bias voltage that is input by a second bias voltage terminal to the second microphone, so that the second microphone collects a second audio signal. A direct current blocking module isolates a direct current component in the first audio signal, and transmits the second audio signal to the audio processing module. In this way, the first microphone in the electronic device and the second microphone in the earphone may share a same audio channel of the audio processing module to transmit an audio signal, reducing a quantity of audio channels of the audio processing module, and reducing costs of the electronic device.

## Description

This application claims priority to Chinese Patent Application No. 202211648946.X, filed with the China National Intellectual Property Administration on December 21, 2022 and entitled "AUDIO CIRCUIT AND CONTROL METHOD THEREFOR, ELECTRONIC DEVICE, AND AUDIO SYSTEM", which is incorporated herein by reference in its entirety.

### TECHNICAL FIELD

This application relates to the field of electronic technologies, and in particular, to an audio circuit and a control method therefor, an electronic device, and an audio system.

### BACKGROUND

With continuous development of electronic technologies, some electronic devices may implement input of an audio signal by using a built-in microphone or an external earphone with a microphone.

In some electronic devices, the built-in microphone of the electronic device needs to use an audio channel of an audio processing module to transmit an audio signal, and the microphone of the external earphone also needs to use another audio channel of the audio processing module to transmit an audio signal. That is, the microphone of the external earphone needs to additionally occupy an audio channel of the audio processing module.

A total quantity of audio channels of the audio processing module restricts a maximum quantity of microphones that can be accommodated by the electronic device. Therefore, to enable the electronic device to support both the built-in microphone for audio signal input and the external earphone with a microphone for audio signal input, an audio processing module that has more audio channels needs to be disposed in the electronic device, increasing costs of the electronic device.

### SUMMARY

Embodiments of this application provide an audio circuit and a control method therefor, an electronic device, and an audio system. A multiplexing circuit in the audio circuit enables a built-in microphone of the electronic device and an external earphone with a microphone to share a same audio channel of an audio processing module, reducing costs of the electronic device.

According to a first aspect, an embodiment of this application provides an audio circuit, including a earphone jack, a first microphone, an audio processing module, and a multiplexing circuit. The multiplexing circuit includes a first bias voltage terminal, a second bias voltage terminal, a pull-up module, and a direct current blocking module. The first bias voltage terminal is connected to the first microphone, and is configured to provide a first bias voltage to the first microphone when no earphone is inserted into the earphone jack, so that the first microphone collects a first audio signal. The first microphone is further connected to the audio processing module, and is configured to transmit the first audio signal to the audio processing module. The pull-up module is respectively connected to the second bias voltage terminal and the earphone jack, and is configured to: when a earphone including a second microphone is inserted into the earphone jack, provide a second bias voltage that is input by the second bias voltage terminal to the second microphone by using the earphone jack, so that the second microphone collects a second audio signal. A first terminal of the direct current blocking module is connected to the earphone jack, a second terminal of the direct current blocking module is connected to the first microphone and the audio processing module, and the direct current blocking module is configured to isolate a direct current component in the first audio signal, and transmit the second audio signal that passes through the earphone jack to the audio processing module. In this way, time-sharing power-on of the first bias voltage terminal and the second bias voltage terminal is set, so that the first microphone in the electronic device and the second microphone in the earphone can share a same audio channel of the audio processing module to transmit an audio signal. This can reduce a quantity of audio channels of the audio processing module in the electronic device, reducing costs of the electronic device. In addition, direct current paths on the first microphone and the second microphone can be separated from each other by using the direct current blocking module, to prevent a first audio signal collected by the first microphone from leaking to a side of the first terminal of the direct current blocking module, improving strength of the first audio signal collected by the first microphone.

In a possible implementation, the audio processing module includes a first audio input pin and a second audio input pin, and the direct current blocking module includes a first capacitor and a second capacitor. A first terminal of the first capacitor is connected to the earphone jack, and a second terminal of the first capacitor is connected to the first audio input pin. A first terminal of the second capacitor is connected to a ground signal terminal, and a second terminal of the second capacitor is connected to the second audio input pin. In this way, the direct current blocking module is formed by using the first capacitor and the second capacitor. Because costs of the capacitor are low, costs of the electronic device are further reduced.

In a possible implementation, a capacitance value of the first capacitor is 54 nF to 796 nF. In this way, the capacitance value of the first capacitor is properly set to reduce a leakage degree of a high-frequency alternating current component in the first audio signal from a leakage path that is formed by the first capacitor, a third resistor, and a detection pin, and reduce a drop degree of the high-frequency alternating current component in the first audio signal.

In a possible implementation, the pull-up module includes a first resistor and a second resistor. A first terminal of the first resistor is connected to the second bias voltage terminal, a second terminal of the first resistor is connected to a first terminal of the second resistor, and a second terminal of the second resistor is connected to the earphone jack. In this way, the pull-up module is formed by using the first resistor and the second resistor, so that composition of a circuit structure of the pull-up module is relatively simple.

In a possible implementation, the multiplexing circuit further includes a first filtering module, and the first filtering module is respectively connected to the earphone jack, the ground signal terminal, the direct current blocking module, and a ground terminal to perform filtering processing on the second audio signal. In this way, filtering processing is performed on the second audio signal by using the first filtering module, to reduce interference caused by a noise signal to the second audio signal.

In a possible implementation, the first filtering module includes a first bead, a third capacitor, a fourth capacitor, a fifth capacitor, a sixth capacitor, and a seventh capacitor. A first terminal of the first bead is connected to the earphone jack, and a second terminal of the first bead is connected to the first terminal of the first capacitor. A first terminal of the third capacitor is connected to the first terminal of the first capacitor, and a second terminal of the third capacitor is connected to the first terminal of the second capacitor. A first terminal of the fourth capacitor is connected to the second terminal of the first bead, and a second terminal of the fourth capacitor is connected to the ground terminal. A first terminal of the fifth capacitor is connected to the second terminal of the first bead, and a second terminal of the fifth capacitor is connected to the ground terminal. A first terminal of the sixth capacitor is connected to the ground signal terminal, and a second terminal of the sixth capacitor is connected to the first terminal of the second capacitor. A first terminal of the seventh capacitor is connected to the second terminal of the sixth capacitor, and a second terminal of the seventh capacitor is connected to the ground terminal. In this way, the first filtering module is formed by using the first bead, the third capacitor, the fourth capacitor, the fifth capacitor, the sixth capacitor, and the seventh capacitor, so that the first filtering module can reduce interference caused by a noise signal to the second audio signal, and composition of a circuit structure of the first filtering module is relatively simple.

In a possible implementation, the multiplexing circuit further includes a earphone detection module, and the earphone detection module is respectively connected to the earphone jack and the audio processing module to detect a earphone type corresponding to the earphone that is inserted into the earphone jack. In this way, the earphone type corresponding to the earphone that is inserted into the earphone jack may be identified by using the earphone detection module, so that the electronic device can more accurately control audio transmission between the electronic device and the earphone.

In a possible implementation, the earphone detection module includes a third resistor, a first terminal of the third resistor is connected to the earphone jack, and a second terminal of the third resistor is connected to the audio processing module. In this way, the third resistor is disposed to form the earphone detection module, so that composition of a circuit structure of the earphone detection module is relatively simple.

In a possible implementation, the multiplexing circuit further includes a second filtering module and a third filtering module. The second filtering module is respectively connected to the first bias voltage terminal, the first microphone, and the ground terminal, and is configured to perform filtering processing on the first bias voltage that is input by the first bias voltage terminal. The third filtering module is respectively connected to the first microphone, the audio processing module, and the ground terminal, and is configured to perform filtering processing on the first audio signal collected by the first microphone. In this way, filtering processing is performed on the first bias voltage by using the second filtering module, to reduce interference caused by a noise signal to the first bias voltage. In addition, filtering processing is performed on the first audio signal by using the third filtering module, to reduce interference caused by the noise signal to the first audio signal.

In a possible implementation, the first microphone includes a power pin, and the second filtering module includes a first bidirectional voltage regulator diode, an eighth capacitor, a ninth capacitor, and a first inductor. A first terminal of the first bidirectional voltage regulator diode is connected to the first bias voltage terminal, and a second terminal of the first bidirectional voltage regulator diode is connected to the ground terminal. A first terminal of the first inductor is connected to the first bias voltage terminal, and a second terminal of the first inductor is connected to the power pin. A first terminal of the eighth capacitor is connected to the first terminal of the first inductor, and a second terminal of the eighth capacitor is connected to the ground terminal. A first terminal of the ninth capacitor is connected to the second terminal of the first inductor, and a second terminal of the ninth capacitor is connected to the ground terminal. In this way, the second filtering module is formed by using the first bidirectional voltage regulator diode, the eighth capacitor, the ninth capacitor, and the first inductor, so that the second filtering module can reduce interference caused by a noise signal to the first bias voltage, and composition of a circuit structure of the second filtering module is relatively simple.

In a possible implementation, the first microphone includes a first audio output pin and a second audio output pin, and the third filtering module includes a second bidirectional voltage regulator diode, a fourth resistor, a fifth resistor, a sixth resistor, a tenth capacitor, an eleventh capacitor, and a twelfth capacitor. A first terminal of the second bidirectional voltage regulator diode is connected to the audio processing module, and a second terminal of the second bidirectional voltage regulator diode is connected to the ground terminal. A first terminal of the fourth resistor is connected to an audio processing module, and a second terminal of the fourth resistor is connected to the first audio output pin. A first terminal of the fifth resistor is connected to the ground terminal, and a second terminal of the fifth resistor is connected to the second audio output pin. A first terminal of the sixth resistor is connected to the second audio output pin, and a second terminal of the sixth resistor is connected to the ground terminal. A first terminal of the tenth capacitor is connected to the first terminal of the fourth resistor, and a second terminal of the tenth capacitor is connected to the first terminal of the fifth resistor. A first terminal of the eleventh capacitor is connected to the first terminal of the fourth resistor, and a second terminal of the eleventh capacitor is connected to the ground terminal. A first terminal of the twelfth capacitor is connected to the first terminal of the fifth resistor, and a second terminal of the twelfth capacitor is connected to the ground terminal. In this way, the third filtering module is formed by using the second bidirectional voltage regulator diode, the fourth resistor, the fifth resistor, the sixth resistor, the tenth capacitor, the eleventh capacitor, and the twelfth capacitor, so that the third filtering module can reduce interference caused by a noise signal to the first audio signal, and composition of a circuit structure of the third filtering module is relatively simple.

In a possible implementation, the earphone jack includes a first SBU pin and a second SBU pin, and the audio processing module includes a first audio input pin, a second audio input pin, and a ground pin. The audio circuit further includes a first switch circuit and a second switch circuit. The first switch circuit is respectively connected to the first SBU pin, the second SBU pin, and the second switch circuit, and the second switch circuit is further connected to the multiplexing circuit and the ground pin. The first switch circuit is configured to: when a charger is inserted into the earphone jack, control the first SBU pin and the second SBU pin to be disconnected from the second switch circuit; and when a earphone is inserted into the earphone jack, control the first SBU pin and the second SBU pin to be connected to the second switch circuit. The second switch circuit is configured to: when the earphone is obversely inserted into the earphone jack, connect the first SBU pin to the first audio input pin by using the multiplexing circuit, and connect the second SBU pin to the ground pin. Alternatively, the second switch circuit is configured to: when the earphone is reversely inserted into the earphone jack, connect the second SBU pin to the first audio input pin by using the multiplexing circuit, and connect the first SBU pin to the ground pin.

In this way, when the charger is inserted into the earphone jack, the first switch circuit may control the first SBU pin and the second SBU pin to be disconnected from the second switch circuit. In this way, even when a short circuit occurs between a VBUS pin and an SBU pin because a foreign matter enters the earphone jack, the VBUS pin does not leak to the ground through the detection pin, increasing a charging speed of the electronic device, so that the electronic device can enter a fast charging mode. In addition, when the earphone is inserted into the earphone jack, the first switch circuit may control the first SBU pin and the second SBU pin to be connected to the second switch circuit, so that the second audio signal collected by the second microphone in the earphone can be normally transmitted to the audio processing module, without affecting normal working of the second microphone in the earphone. However, the second switch circuit may normally transmit the second audio signal collected by the second microphone in the earphone when the earphone is obversely inserted or reversely inserted into the earphone jack, so that the electronic device can support obverse insertion or reverse insertion of the earphone into the earphone jack.

In a possible implementation, the audio circuit further includes a processor, and the first switch circuit includes a first switch element and a second switch element. A control terminal of the first switch element is connected to the processor, a first terminal of the first switch element is connected to the first SBU pin, and a second terminal of the first switch element is connected to the second switch circuit. A control terminal of the second switch element is connected to the processor, a first terminal of the second switch element is connected to the second SBU pin, and a second terminal of the second switch element is connected to the second switch circuit. In this way, the first switch circuit is formed by using the first switch element and the second switch element, so that composition of a circuit structure of the first switch circuit is relatively simple.

According to a second aspect, an embodiment of this application provides a method for controlling an audio circuit. The method is applied to the foregoing audio circuit, and includes: detecting whether a earphone is inserted into a earphone jack; when no earphone is inserted into the earphone jack, a first bias voltage terminal provides a first bias voltage to a first microphone; the first microphone collects a first audio signal based on the first bias voltage, and transmits the first audio signal to an audio processing module; and when the earphone is inserted into the earphone jack, a pull-up module provides, by using the earphone jack, a second bias voltage that is input by a second bias voltage terminal to a second microphone in the earphone, where the second bias voltage is used to control the second microphone to collect a second audio signal, and the second audio signal is transmitted to the audio processing module by using the earphone jack and the direct current blocking module successively.

In a possible implementation, the earphone jack includes a first SBU pin and a second SBU pin, and the audio processing module includes a first audio input pin, a second audio input pin, and a ground pin. The audio circuit further includes a first switch circuit and a second switch circuit. The first switch circuit is respectively connected to the first SBU pin, the second SBU pin, and the second switch circuit, and the second switch circuit is further connected to a multiplexing circuit and the ground pin. The method further includes: detecting a type of a device inserted into the earphone jack; when a charger is inserted into the earphone jack, the first switch circuit controls the first SBU pin and the second SBU pin to be disconnected from the second switch circuit; and when a earphone is inserted into the earphone jack, the first switch circuit controls the first SBU pin and the second SBU pin to be connected to the second switch circuit.

According to a third aspect, an embodiment of this application provides an electronic device, including the foregoing audio circuit.

According to a fourth aspect, an embodiment of this application provides an audio system, including a earphone and the foregoing electronic device. A second microphone is disposed in the earphone. When the earphone is inserted into a earphone jack of the electronic device, the second microphone is configured to send a collected second audio signal to the electronic device.

Effects of various possible implementations of the second aspect to the fourth aspect are similar to effects of the first aspect and the possible designs of the first aspect, and details are not described herein again.

### BRIEF DESCRIPTION OF DRAWINGS

FIG. 1 is a schematic diagram of a scenario according to an embodiment of this application;
FIG. 2 is a schematic diagram of a hardware system structure of an electronic device according to an embodiment of this application;
FIG. 3 is a schematic diagram of a structure of an audio system according to an embodiment of this application;
FIG. 4 is a schematic diagram of a structure of a Type-C interface according to an embodiment of this application;
FIG. 5 is a circuit diagram of a first switch circuit and a second switch circuit according to an embodiment of this application; and
FIG. 6 is a circuit diagram of a multiplexing circuit according to an embodiment of this application.

### DESCRIPTION OF EMBODIMENTS

To clearly describe the technical solutions in embodiments of this application, in the embodiments of this application, words such as "first" and "second" are used to distinguish between same items or similar items with basically the same functions and effects. For example, a first chip and a second chip are merely intended to distinguish between different chips, and are not intended to limit a sequence of the first chip and the second chip. A person skilled in the art may understand that the words such as "first" and "second" do not limit a quantity or an execution sequence, and the words such as "first" and "second" do not define a definite difference.

It should be noted that the words such as "example" or "for example" in the embodiments of this application are used to indicate an example, an illustration, or a description. Any embodiment or design solution described as "example" or "for example" in this application should not be construed as being preferred or advantageous over other embodiments or design solutions. Exactly, use of the words such as "example" or "for example" is intended to present related concepts in a specific manner.

In the embodiments of this application, "at least one" means one or more, and "a plurality of" means two or more. "And/Or" describes an association relationship between associated objects, and represents that three relationships may exist. For example, "A and/or B" may represent the following cases: Only A exists, both A and B exist, and only B exists, where A and B may be singular or plural. The character "/" usually indicates an "or" relationship between associated objects. "At least one of the following items" or a similar expression means any combination of these items, including a single item or any combination of a plurality of items. For example, at least one of a, b, or c may represent a, b, c, a-b, a-c, b-c, or a-b-c, where a, b, and c may be singular or plural.

In some electronic devices, input of an audio signal may be implemented by using a built-in microphone or an external earphone with a microphone. For example, when a user performs an operation such as a voice call or sound recording, a earphone may not be inserted into a earphone jack of an electronic device. In this case, a microphone disposed in the electronic device may collect a sound signal of the user, and transmit the sound signal to an audio processing module disposed in the electronic device, to implement a corresponding function. If the user is in a public place or a noisy environment, the user may insert a earphone carrying a microphone into the earphone jack of the electronic device. The microphone disposed in the earphone may collect a sound signal of the user, and transmit the sound signal to the audio processing module disposed in the electronic device by using the earphone jack, to implement a corresponding function.

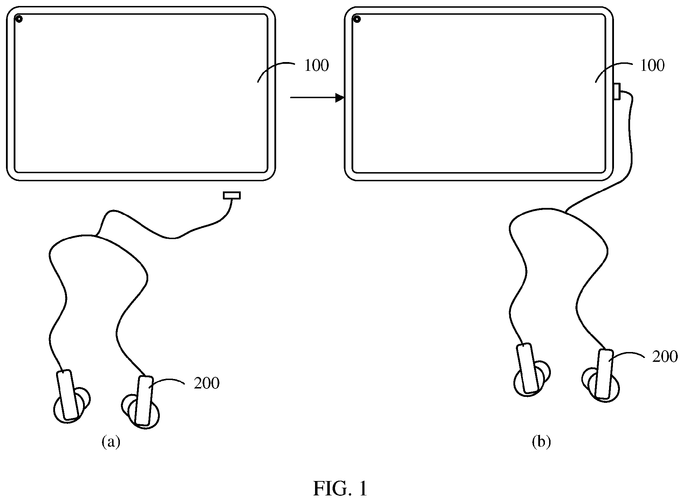

For example, FIG. 1 is a schematic diagram of a scenario to which an embodiment of this application is applicable. Referring to FIG. 1, this scenario may include an electronic device 100 and a earphone 200. A earphone jack is disposed in the electronic device 100. The electronic device 100 may be a tablet computer.

As shown in (a) in FIG. 1, the earphone 200 is not inserted into the earphone jack of the electronic device 100. In this case, when an audio signal needs to be collected, the audio signal may be collected by using a microphone disposed in the electronic device 100.

As shown in (b) in FIG. 1, a user may alternatively insert the earphone 200 into the earphone jack in the electronic device 100, to implement connection between the earphone 200 and the electronic device 100. In this case, when an audio signal needs to be collected, a microphone disposed in the earphone 200 may collect the audio signal, and transmit the collected audio signal to the electronic device 100 by using the earphone jack of the electronic device 100.

The earphone jack in the electronic device 100 may be a universal serial bus (universal serial bus, USB) interface, such as a USB Type-C interface. In the following description, the USB Type-C interface is briefly referred to as a Type-C interface. Alternatively, the earphone jack in the electronic device 100 may be a 3.5 mm open mobile electronic device platform (open mobile terminal platform, OMTP) standard interface or a cellular telecommunications industry association of the USA (cellular telecommunications industry association of the USA, CTIA) standard interface.

An example in which the earphone jack in the electronic device 100 is the Type-C interface is used. The earphone 200 may be a earphone having a Type-C interface. The Type-C interface in the earphone 200 is referred to as a Type-C male connector, the Type-C interface in the electronic device 100 is referred to as a Type-C female connector, and the Type-C male connector is adapted to the Type-C female connector. Therefore, the Type-C interface in the earphone 200 may be inserted into the Type-C interface in the electronic device 100, to implement connection between the earphone 200 and the electronic device 100. Alternatively, the earphone 200 may be a earphone having a 3.5 mm cylindrical connector. In this case, the earphone 200 may be connected to the Type-C interface of the electronic device 100 by using an adapter cable. Specifically, the adapter cable includes a earphone jack and a Type-C connector. The 3.5 mm cylindrical connector in the earphone 200 may be inserted into the earphone jack of the adapter cable, and the Type-C connector in the adapter cable may be inserted into the Type-C interface of the electronic device 100.

In an example in which the earphone jack of the electronic device 100 is a 3.5 mm standard interface, the earphone 200 may be a earphone having a 3.5 mm cylindrical connector. In this case, the 3.5 mm cylindrical connector in the earphone 200 may be inserted into the earphone jack of the electronic device 100, to implement connection between the earphone 200 and the electronic device 100.

In some related technologies, a microphone is disposed in the electronic device. When the user collects an audio signal by using the built-in microphone of the electronic device, the built-in microphone of the electronic device needs to use an audio channel of the audio processing module to transmit the collected audio signal to the audio processing module. When the user collects an audio signal by using the earphone (in which a microphone is disposed) that is inserted into the earphone jack of the electronic device, the microphone of the external earphone also needs to separately use another audio channel of the audio processing module to transmit the collected audio signal to the audio processing module, that is, the microphone of the external earphone needs to additionally occupy an audio channel.

A total quantity of audio channels of the audio processing module in the electronic device is limited, and the total quantity of audio channels of the audio processing module restricts a maximum quantity of microphones that can be accommodated by the electronic device. Therefore, to enable the electronic device to support both the built-in microphone for audio signal input and the external earphone with a microphone for audio signal input, an audio processing module that has more audio channels needs to be disposed in the electronic device, increasing costs of the electronic device.

It should be understood that, in the following description in this embodiment of this application, the microphones disposed in the electronic device may be collectively referred to as a first microphone, and the microphones disposed in the earphone may be collectively referred to as a second microphone. The first microphone may be a silicon microphone, such as a micro electro mechanical system (micro electro mechanical systems, MEMS) silicon microphone, and the second microphone may also be a silicon microphone. Certainly, the first microphone and the second microphone may alternatively be another type of microphone. This is not limited in this embodiment of this application.

In addition, the earphone in this embodiment of this application may be a wired earphone. The wired earphone is a earphone that may be connected to the electronic device by using a wire (such as a cable). Based on a cable shape, wired earphones may be further classified into a cylindrical cable earphone, a flexible flat cable earphone, and the like. In terms of a earphone wearing manner, the earphone may alternatively be a semi-in-ear earphone, an earmuff earphone (which may also be referred to as an over-ear earphone), an ear-mounted earphone, a neck-mounted earphone, or the like.

Based on the foregoing description, an embodiment of this application provides an audio circuit, including a earphone jack, a first microphone, an audio processing module, and a multiplexing circuit. The multiplexing circuit includes a first bias voltage terminal, a second bias voltage terminal, a pull-up module, and a direct current blocking module. When no earphone is inserted into the earphone jack, the first bias voltage terminal is configured to provide a first bias voltage to the first microphone, so that the first microphone collects a first audio signal. The first microphone is connected to the audio processing module, and the first microphone may transmit the first audio signal to the audio processing module. When a earphone including a second microphone is inserted into the earphone jack, the pull-up module is configured to provide, by using the earphone jack, a second bias voltage that is input by the second bias voltage terminal to the second microphone, so that the second microphone collects a second audio signal. In addition, a first terminal of the direct current blocking module is connected to the earphone jack, and a second terminal of the direct current blocking module is connected to the first microphone and the audio processing module, to isolate a direct current component in the first audio signal, and transmit the second audio signal that passes through the earphone jack to the audio processing module. Therefore, in this embodiment of this application, when no earphone is inserted into the earphone jack, the first bias voltage is input by using the first bias voltage terminal, so that the first microphone can collect the first audio signal and transmit the first audio signal to the audio processing module. When the earphone is inserted into the earphone jack, the second bias voltage is input by using the second bias voltage terminal, so that the second microphone can collect the second audio signal, and the second audio signal is transmitted to the audio processing module by using the earphone jack and the direct current blocking module successively. In other words, time-sharing power-on of the first bias voltage terminal and the second bias voltage terminal is set, so that the first microphone in the electronic device and the second microphone in the earphone can share a same audio channel of the audio processing module to transmit an audio signal. This can reduce a quantity of audio channels of the audio processing module in the electronic device, reducing costs of the electronic device. In addition, direct current paths on the first microphone and the second microphone can be separated from each other by using the direct current blocking module, to prevent a first audio signal collected by the first microphone from leaking to a side of the first terminal of the direct current blocking module, improving strength of the first audio signal collected by the first microphone.

It may be understood that, when the first microphone in the electronic device and the second microphone in the earphone can share the same audio channel of the audio processing module to transmit the audio signal, in a case in which the audio channel of the audio processing module is limited, the electronic device in this embodiment of this application may accommodate more microphones.

The audio circuit provided in this embodiment of this application may be applied to an electronic device. The electronic device may be a mobile phone (mobile phone), a tablet computer (Pad), a smart TV, a wearable device, a computer with a wireless sending/receiving function, a virtual reality (virtual reality, VR) electronic device, an augmented reality (augmented reality, AR) electronic device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the electronic device are not limited in the embodiments of this application.

To better understand the embodiments of this application, the following describes a structure of the electronic device in the embodiments of this application.

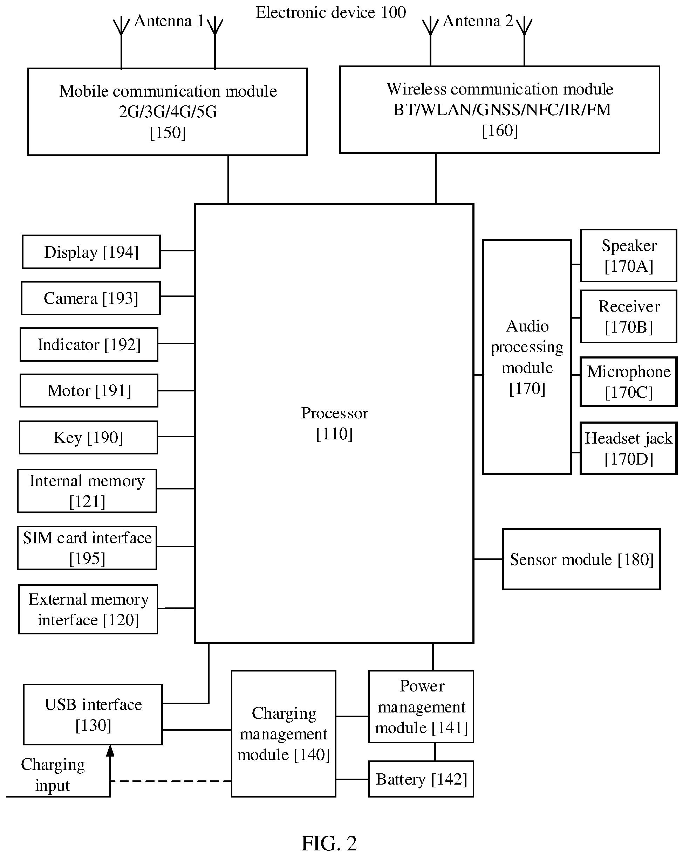

FIG. 2 is a schematic diagram of a structure of an electronic device 100. The electronic device 100 may include a processor 110, an external memory interface 120, an internal memory 121, a USB interface 130, a charging management module 140, a power management module 141, a battery 142, an antenna 1, an antenna 2, a mobile communication module 150, a wireless communication module 160, an audio processing module 170, a speaker 170A, a receiver 170B, a microphone 170C, a earphone jack 170D, a sensor module 180, a key 190, a motor 191, an indicator 192, a camera 193, a display 194, a subscriber identification module (subscriber identification module, SIM) card interface 195, and the like.

It may be understood that the structure illustrated in this embodiment of this application constitutes no specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include a system on chip (system on chip, SOC) processor, an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache memory. The memory may store instructions or data just used or cyclically used by the processor 110. If the processor 110 needs to use the instructions or the data again, the processor may invoke the instructions or the data from the memory. This avoids repeated access and reduces a waiting time of the processor 110, thereby improving system efficiency.

The charging management module 140 is configured to receive a charging input from a charger. The charger may be a wireless charger or a wired charger. In some embodiments of wired charging, the charging management module 140 may receive a charging input from a wired charger by using the USB interface 130. In some embodiments of wireless charging, the charging management module 140 may receive a wireless charging input by using a wireless charging coil of the electronic device 100. When charging the battery 142, the charging management module 140 may further supply power to the electronic device by using the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. The antennas of the electronic device 100 may be configured to cover one or more communication bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a solution for wireless communication that is applied to the electronic device 100 and that includes 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert, by using the antenna 1, an amplified signal into an electromagnetic wave for radiation. In some embodiments, at least some functional modules of the mobile communication module 150 may be disposed in the processor 110. In some embodiments, at least some functional modules of the mobile communication module 150 may be disposed in a same device as at least some modules of the processor 110.

The wireless communication module 160 may provide a solution for wireless communication that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert, by using the antenna 2, the signal into an electromagnetic wave for radiation.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology.

The electronic device 100 implements a display function by using the GPU, the display 194, the application processor, and the like. The GPU is a microprocessor for image processing and is connected to the display 194 and the application processor. The GPU is configured to perform mathematical and geometric computing for graphics rendering. The processor 110 may include one or more GPUs that execute program instructions to generate or change display information.

The display 194 is configured to display an image, display a video, receive a slide operation, and so on. The display 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include one or more displays 194.

The electronic device 100 may implement a shooting function by using the ISP, the camera 193, the video codec, the GPU, the display 194, the application processor, and the like.

The ISP is configured to process data fed back by the camera 193. For example, during photographing, a shutter is opened, and light is transmitted to a photosensitive element of the camera through a lens. An optical signal is converted into an electrical signal. The photosensitive element of the camera transmits the electrical signal to the ISP for processing, to convert the electrical signal into an image visible to naked eyes. The ISP may further perform algorithm optimization on noise, brightness, and complexion of the image. The ISP may further optimize parameters such as exposure and color temperature of a shooting scene. In some embodiments, the ISP may be disposed in the camera 193.

The camera 193 is configured to capture a still image or a video. An optical image of an object is generated through the lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or more cameras 193.

The external memory interface 120 may be configured to connect to an external memory card, for example, a Micro SD card, to expand a storage capability of the electronic device 100. The external memory card communicates with the processor 110 by using the external memory interface 120, to implement a data storage function. For example, files such as music and videos are stored in the external memory card.

The internal memory 121 may be configured to store computer-executable program code, and the executable program code includes instructions. The internal memory 121 may include a program storage area and a data storage area. The program storage area may store an operating system, an application required by at least one function (for example, a sound playing function or an image playing function), and the like. The data storage area may store data (for example, audio data and a phone book) and the like created during use of the electronic device 100. In addition, the internal memory 121 may include a high-speed random access memory, and may further include a non-volatile memory, for example, at least one magnetic disk storage device, a flash memory device, or a universal flash storage (universal flash storage, UFS). The processor 110 performs various function applications and data processing of the electronic device 100 by running the instructions stored in the internal memory 121 and/or instructions stored in the memory disposed in the processor.

The electronic device 100 may implement an audio function by using the audio processing module 170, the speaker 170A, the receiver 170B, the microphone 170C, the earphone jack 170D, the application processor, and the like. For example, music playing and sound recording are implemented.

The audio processing module 170 is configured to convert digital audio information into an analog audio signal for output, and is also configured to convert an analog audio input into a digital audio signal. The audio processing module 170 may be further configured to encode and decode an audio signal. In some embodiments, the audio processing module 170 may be disposed in the processor 110 or some functional modules of the audio processing module 170 may be disposed in the processor 110. In some embodiments, the audio processing module 170 may be an audio processing chip, such as an audio codec (namely, a Codec).

The speaker 170A, also referred to as a "horn", is configured to convert an audio electrical signal into a sound signal. The electronic device 100 may be used to listen to music or answer a call in a hands-free mode by using the speaker 170A.

The receiver 170B, also referred to as an "earpiece", is configured to convert an audio electrical signal into a sound signal. When a call is answered or a voice message is listened to by using the electronic device 100, the receiver 170B may be put close to a human ear to listen to a voice.

The microphone 170C, also referred to as a "mic" or "mike", is configured to convert a sound signal into an electrical signal. When making a call or sending a voice message, a user may make a sound by approaching the mouth to the microphone 170C, to input a sound signal to the microphone 170C. At least one microphone 170C may be disposed in the electronic device 100. In some other embodiments, two microphones 170C may be disposed in the electronic device 100, to implement a noise reduction function in addition to collecting a sound signal. In some other embodiments, three, four, or more microphones 170C may alternatively be disposed in the electronic device 100, to collect a sound signal, reduce noise, further identify a sound source, implement a directional sound recording function, and so on. In the embodiments of this application, any microphone 170C in the electronic device 100 may be referred to as a first microphone.

The earphone jack 170D is configured to connect to a wired earphone. The earphone jack 170D may be a USB interface 130, or may be a 3.5 mm OMTP standard interface or a CTIA standard interface.

The key 190 includes a power-on/off key, a volume key, and the like. The key 190 may be a mechanical key, or may be a touch key. The electronic device 100 may receive a key input and generate a key signal input related to user settings and function control of the electronic device 100.

The motor 191 may generate a vibration prompt. The motor 191 may be configured to provide a vibration prompt for an incoming call, and may also be configured to provide vibration feedback for a touch. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, may be configured to indicate a charging status or a power change, and may be further configured to indicate a message, a missed call, a notification, and the like.

The SIM card interface 195 is configured to connect to a SIM card. The SIM card may be inserted into or removed from the SIM card interface 195, to come into contact with or be separated from the electronic device 100. The electronic device 100 may support one or more SIM card interfaces.

The following describes, in detail by using specific embodiments, the technical solutions of this application and how the foregoing technical problems are resolved by using the technical solutions of this application. The following several specific embodiments may be implemented independently, or may be combined with each other. For same or similar concepts or processes, details may not be described in some embodiments again.

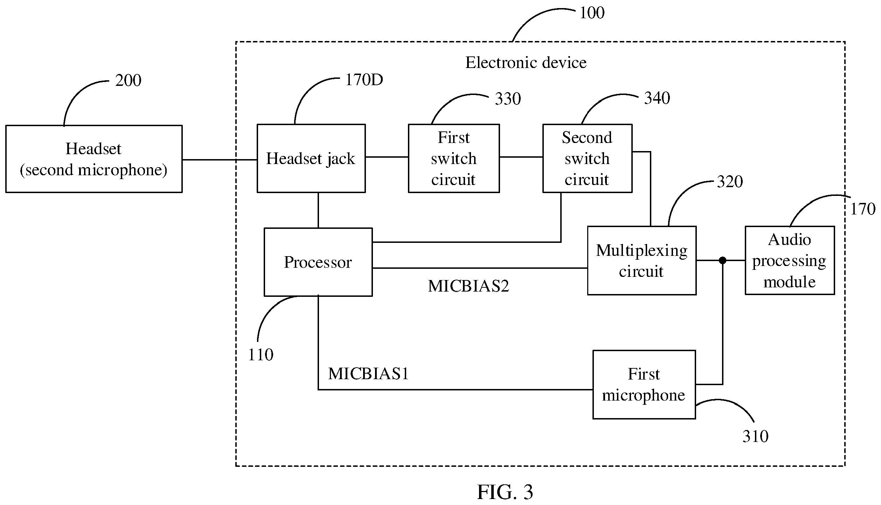

For example, FIG. 3 is a schematic diagram of a structure of an audio system according to an embodiment of this application. Referring to FIG. 3, the audio system includes an electronic device 100 and a earphone 200.

The electronic device 100 may include an audio circuit, and the audio circuit may include a earphone jack 170D, a first microphone 310, an audio processing module 170, a multiplexing circuit 320, a first switch circuit 330, a second switch circuit 340, and a processor 110.

A second microphone is disposed in the earphone 200, and the earphone 200 may be inserted into the earphone jack 170D in the audio circuit, to implement connection between the earphone 200 and the electronic device 100. When the earphone 200 is inserted into the earphone jack 170D, the electronic device 100 may supply power to the second microphone in the earphone 200, so that the second microphone may collect a second audio signal, and send the collected second audio signal to the electronic device 100.

The earphone jack 170D may be further connected to the first switch circuit 330, the first switch circuit 330 is further connected to the second switch circuit 340, the second switch circuit 340 is further connected to the multiplexing circuit 320, the multiplexing circuit 320 and the first microphone 310 are further connected to the audio processing module 170, and the processor 110 is respectively connected to the earphone jack 170D, the second switch circuit 340, the multiplexing circuit 320, and the first microphone 310.

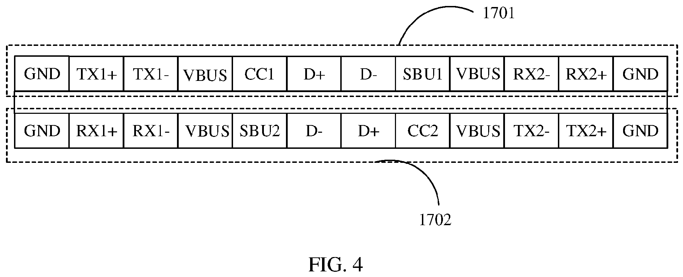

In some embodiments, the earphone jack 170D may be a Type-C interface. As shown in FIG. 4, the Type-C interface may include a first pin group 1701 and a second pin group 1702 that are symmetrically distributed. The first pin group 1701 includes a GND pin, a TX1+ pin, a TX1- pin, a VBUS pin, a CC1 pin, a D+ pin, a D- pin, an SBU1 pin, a VBUS pin, an RX2- pin, an RX2+ pin, and a GND pin that are successively distributed. The second pin group 1702 includes a GND pin, an RX1+ pin, an RX1- pin, a VBUS pin, an SBU2 pin, a D- pin, a D+ pin, a CC2 pin, a VBUS pin, a TX2- pin, a TX2+ pin, and a GND pin that are successively distributed. The GND pin is a ground pin, the CC pin is a configuration channel (configuration channel, CC) pin, and the SBU pin is a side band use (side band use, SBU) pin.

The following describes a function of each pin. The D+ pin and the D- pin: When a USB 3.0 interface is unavailable, the D+ pin and the D- pin provide a signal channel for a USB 2.0 signal. The VBUS pin and the GND pin can provide a power supply capability for an upstream data interface, or support point-to-point power supply in some cases. The TX1/2 pin and the RX1/2 pin provide an ultra-speed data link between a maximum of two channels, to implement a maximum of a 20 Gbps bidirectional bandwidth. The CC1 pin and the CC2 pin are used to discover, configure, and manage a connected external device, for example, detect whether an external device is inserted into the Type-C interface, a device type of an inserted external device, and an insertion direction (obverse insertion or reverse insertion) of the inserted external device. The SBU1 pin and the SUB2 pin are applicable to transmission of non-USB signals, for example, transmission of analog audio signals.

In this embodiment of this application, a working mode of the electronic device 100 may be a dual role port (dual role port, DRP) mode. The DRP mode may be used as both a downstream facing port (downstream facing port, DFP) mode and an upstream facing port (upstream facing port, UFP) mode. When the electronic device 100 is in a power-on state, the electronic device periodically switches between the DFP mode and the UFP mode. When the working mode of the electronic device 100 is the DFP mode, the CC1 pin in the Type-C interface of the electronic device 100 is connected to a pull-up resistor, and the CC2 pin in the Type-C interface of the electronic device 100 is also connected to a pull-up resistor. When the working mode of the electronic device 100 is the UFP mode, the CC1 pin in the Type-C interface of the electronic device 100 is connected to a pull-down resistor, and the CC2 pin in the Type-C interface of the electronic device 100 is also connected to a pull-down resistor.

A working mode of a charger may be the DFP mode. In this case, the charger may include two pull-up resistors and the Type-C interface shown in FIG. 4. A CC1 pin in the Type-C interface of the charger may be connected to one of the pull-up resistors, and a CC2 pin in the Type-C interface of the charger may be connected to the other pull-up resistor.

When the Type-C interface of the charger is inserted into the Type-C interface of the electronic device 100, if the electronic device 100 detects that a voltage at the CC1 pin or the CC2 pin is pulled up, it is determined that the external device inserted into the Type-C interface of the electronic device 100 is the charger. Specifically, when the electronic device 100 detects that the voltage of the CC1 pin in the Type-C interface of the electronic device 100 is pulled up, the electronic device 100 determines that the CC1 pin in the electronic device 100 is connected to the charger, that is, the charger is obversely inserted into the Type-C interface of the electronic device 100. When the electronic device 100 detects that the voltage of the CC2 pin in the Type-C interface of the electronic device 100 is pulled up, the electronic device 100 determines that the CC2 pin in the electronic device 100 is connected to the charger, that is, the charger is reversely inserted into the Type-C interface of the electronic device 100.

A working mode of the earphone 200 may be the UFP mode. In this case, the earphone 200 may include two pull-down resistors and the Type-C interface shown in FIG. 4. A CC1 pin in the Type-C interface of the earphone 200 may be connected to one of the pull-down resistors, and a CC2 pin in the Type-C interface of the earphone 200 may be connected to the other pull-down resistor.

When the Type-C interface of the earphone 200 is inserted into the Type-C interface of the electronic device 100, if the electronic device 100 detects that the voltage at the CC1 pin or the CC2 pin is pulled down, it is determined that the external device inserted into the Type-C interface of the electronic device 100 is the earphone 200. Specifically, when the electronic device 100 detects that the voltage of the CC1 pin in the Type-C interface of the electronic device 100 is pulled down, the electronic device 100 determines that the CC1 pin in the electronic device 100 is connected to the earphone 200, that is, the earphone 200 is obversely inserted into the Type-C interface of the electronic device 100. When the electronic device 100 detects that the voltage of the CC2 pin in the Type-C interface of the electronic device 100 is pulled down, the electronic device 100 determines that the CC2 pin in the electronic device 100 is connected to the earphone 200, that is, the earphone 200 is reversely inserted into the Type-C interface of the electronic device 100.

It should be noted that when both the CC1 pin and the CC2 pin in the Type-C interface of the electronic device 100 are in an open (open) state, it is determined that no external device is inserted into the Type-C interface of the electronic device 100.

Therefore, the electronic device 100 in this embodiment of this application may detect, by detecting voltage statuses of the CC1 pin and the CC2 pin in the Type-C interface, whether an external device is inserted into the Type-C interface of the electronic device 100, a device type of the external device inserted into the Type-C interface, an insertion direction of the inserted external device, and the like. The device type may be a power sourcing equipment or a powered device. The power sourcing equipment may be a charger, and the powered device may be a earphone 200.

In some embodiments, the CC1 pin and the CC2 pin in the Type-C interface of the electronic device 100 may be connected to the processor 110. To be specific, the processor 110 may determine, by detecting the voltage statuses of the CC1 pin and the CC2 pin in the Type-C interface of the electronic device 100, whether an external device is inserted into the Type-C interface of the electronic device 100, a device type of the external device inserted into the Type-C interface, and an insertion direction of the inserted external device. The processor 110 may be a SOC processor.

In this embodiment of this application, the SBU1 pin shown in FIG. 4 may be referred to as a first SBU pin, and the SBU2 pin shown in FIG. 4 may be referred to as a second SBU pin, that is, the earphone jack 170D may include the first SBU pin and the second SBU pin.

The first switch circuit 330 is actually connected to the first SBU pin, the second SBU pin, and the second switch circuit 340, respectively. The first switch circuit 330 is configured to: when the charger is inserted into the earphone jack 170D, control the first SBU pin and the second SBU pin to be disconnected from the second switch circuit 340; and when the earphone 200 is inserted into the earphone jack 170D, control the first SBU pin and the second SBU pin to be connected to the second switch circuit 340.

In other words, when the processor 110 detects that the charger is inserted into the earphone jack 170D of the electronic device 100, the first switch circuit 330 is in an off state, so that a path between the first SBU pin and the second switch circuit 340 is disconnected, and a path between the second SBU pin and the second switch circuit 340 is also disconnected.

When the processor 110 detects that the earphone 200 is inserted into the earphone jack 170D of the electronic device 100, the first switch circuit 330 is in an on state, so that a path between the first SBU pin and the second switch circuit 340 is connected, and a path between the second SBU pin and the second switch circuit 340 is also connected.

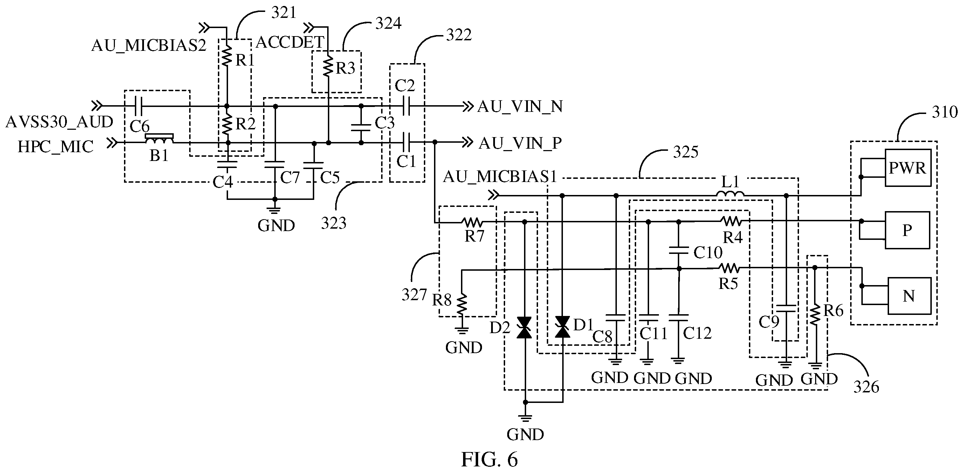

In this embodiment of this application, the second switch circuit 340 may be connected to the multiplexing circuit 320. A earphone detection module (for details about the earphone detection module, refer to the corresponding description of FIG. 6) in the multiplexing circuit 320 is connected to a detection pin ACCDET (for details about the detection pin ACCDET, refer to the corresponding description of FIG. 6) in the audio processing module 170, and the detection pin ACCDET in the audio processing module 170 is in a low impedance state relative to a ground terminal, that is, an impedance between the detection pin ACCDET in the audio processing module 170 and the ground terminal is quite small, which is equivalent to a short circuit to the ground.

If the first switch circuit 330 is not disposed in the audio circuit, when a test item "VBUS and SBU short circuit test" is performed in a test process of the electronic device 100, a short circuit occurs between the VBUS pin and one of the SBU pins, for example, a short circuit occurs between the VBUS pin and the first SBU pin. In addition, the first SBU pin is further connected to the earphone detection module in the multiplexing circuit 320 by using the second switch circuit 340, and the earphone detection module is connected to the detection pin ACCDET in the audio processing module 170, so that the VBUS pin leaks to the ground by using the detection pin ACCDET in the audio processing module 170. After the test, when the test item "VBUS and SBU short circuit test" is performed, an actual leakage current is approximately 500 mA, which causes the electronic device 100 to fail to reach a charging current threshold (such as 800 mA) for fast charging, and consequently, the electronic device 100 cannot enter a fast charging mode.

In addition, in a process of using the electronic device 100, because positions of the VBUS pin and the SBU pin in the Type-C interface are immediately next to each other, when a foreign matter such as dust or water vapor enters the Type-C interface of the electronic device 100, a short circuit easily occurs between the VBUS pin and the SBU pin in the Type-C interface of the electronic device 100. If the first switch circuit 330 is not disposed in the audio circuit, the VBUS pin leaks to the ground by using the detection pin ACCDET in the audio processing module 170. In a case in which the VBUS pin of the electronic device 100 leaks to the ground by using the detection pin ACCDET, when the charger is inserted into the Type-C interface of the electronic device 100, a charging speed of the electronic device 100 decreases, and the electronic device 100 cannot enter the fast charging mode.

Therefore, in this embodiment of this application, the first switch circuit 330 is added between the Type-C interface and the second switch circuit 340, and the first switch circuit 330 is respectively connected to the first SBU pin, the second SBU pin, and the second switch circuit 340. When the charger is inserted into the Type-C interface, the first switch circuit 330 may control the first SBU pin and the second SBU pin to be disconnected from the second switch circuit 340. In this way, even when a short circuit occurs between the VBUS pin and the SBU pin because a foreign matter enters the Type-C interface, the VBUS pin does not leak to the ground through the detection pin ACCDET, increasing a charging speed of the electronic device 100, so that the electronic device 100 can enter the fast charging mode. In addition, when the earphone 200 is inserted into the Type-C interface, the first switch circuit 330 may control the first SBU pin and the second SBU pin to be connected to the second switch circuit 340. In this way, a second audio signal collected by the second microphone in the earphone 200 may be transmitted to the second switch circuit 340 by using the first SBU pin and the second SBU pin, and then transmitted to the audio processing module 170 by using the second switch circuit 340 and the multiplexing circuit 320, so that the second audio signal collected by the second microphone in the earphone 200 may be normally transmitted to the audio processing module 170, without affecting normal working of the second microphone in the earphone 200.

In some embodiments, the processor 110 may be directly connected to the first switch circuit 330, or indirectly connected to the first switch circuit 330 by using the power management module 141. The processor 110 may detect a type of a device inserted into the earphone jack 170D. When it is detected that the charger is inserted into the earphone jack 170D, the processor 110 may control the first switch circuit 330 to be turned off, so that the first switch circuit 330 controls the first SBU pin and the second SBU pin to be disconnected from the second switch circuit 340. When it is detected that the earphone 200 is inserted into the earphone jack 170D, the processor 110 may control the first switch circuit 330 to be turned on, so that the first switch circuit 330 controls the first SBU pin and the second SBU pin to be connected to the second switch circuit 340.

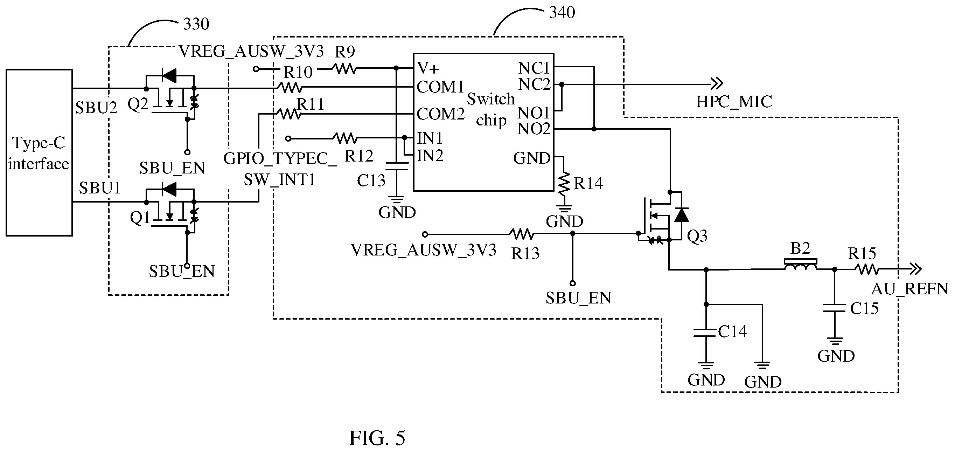

As shown in FIG. 5, the first switch circuit 330 includes a first switch element Q1 and a second switch element Q2. A control terminal of the first switch element Q1 may be connected to the processor 110, a first terminal of the first switch element Q1 is connected to the first SBU pin, and a second terminal of the first switch element Q1 is connected to the second switch circuit 340. A control terminal of the second switch element Q2 may be connected to the processor 110, a first terminal of the second switch element Q2 is connected to the second SBU pin, and a second terminal of the second switch element Q2 is connected to the second switch circuit 340.

The first switch element Q1 may be a metal-oxide-semiconductor (metal-oxide-semiconductor, MOS) transistor. Certainly, the first switch element Q1 may alternatively be another suitable controllable device, such as a bipolar junction transistor (bipolar junction transistor, BJT) device or an insulated gate bipolar transistor (insulated gate bipolar transistor, IGBT) device. Correspondingly, the second switch element Q2 may be a MOS transistor. Certainly, the second switch element Q2 may alternatively be another suitable controllable device, such as a BJT device or an IGBT device.

An example in which both the first switch element Q1 and the second switch element Q2 are MOS transistors is used. The first switch element Q1 and the second switch element Q2 may be N-type transistors. A control terminal of the first switch element Q1 refers to a gate of the first switch element Q1, a first terminal of the first switch element Q1 refers to a drain of the first switch element Q1, and a second terminal of the first switch element Q1 refers to a source of the first switch element Q1. The first switch element Q1 is turned on when a high level is input at the gate, and is cut off when a low level is input at the gate. The second switch element Q2 may also be an N-type transistor. A control terminal of the second switch element Q2 refers to a gate of the second switch element Q2, a first terminal of the second switch element Q2 refers to a drain of the second switch element Q2, and a second terminal of the second switch element Q2 refers to a source of the second switch element Q2. The second switch element Q2 is turned on when a high level is input at the gate, and is cut off when a low level is input at the gate.

Certainly, it may be understood that both the first switch element Q1 and the second switch element Q2 may be replaced with P-type transistors, and the first switch element Q1 and the second switch element Q2 are turned on when a low level is input at the gate and cut off when a high level is input at the gate.

The following describes a working process during turn-on/turn-off of the first switch element Q1 and the second switch element Q2 by using an example in which both the first switch element Q1 and the second switch element Q2 are N-type transistors.

In a possible implementation, a power management module 141 may be integrated into the processor 110. The power management module 141 in the processor 110 is connected to a first terminal of a thirteenth resistor R13 in the second switch circuit 340, and a second terminal (namely, SBU_EN) of the thirteenth resistor R13 is further connected to the control terminal of the first switch element Q1 and the control terminal of the second switch element Q2. In this case, when the processor 110 determines, by detecting the voltage statuses of the CC1 pin and the CC2 pin in the Type-C interface of the electronic device 100, that the earphone 200 is inserted into the Type-C interface of the electronic device 100, the processor 110 may output a power supply voltage VREG_AUSW_3V3 by using the internal power management module 141, and the power supply voltage VREG_AUSW_3V3 is then input to the control terminals of the first switch element Q1 and the second switch element Q2 by using the thirteenth resistor R13, to control the first switch element Q1 and the second switch element Q2 to be turned on, so that the path between the first SBU pin and the second switch circuit 340 is connected and the path between the second SBU pin and the second switch circuit 340 is also connected. However, when the processor 110 determines, by detecting the voltage statuses of the CC1 pin and the CC2 pin in the Type-C interface of the electronic device 100, that the charger is inserted into the Type-C interface of the electronic device 100, the processor 110 does not output the power supply voltage VREG_AUSW_3V3 by using the power management module 141 inside the processor. In this case, the first switch element Q1 and the second switch element Q2 are cut off, so that the path between the first SBU pin and the second switch circuit 340 is disconnected, and the path between the second SBU pin and the second switch circuit 340 is also disconnected. This prevents leakage, so that the electronic device 100 can enter the fast charging mode.

In another possible implementation, the processor 110 is disposed separately from the power management module 141. The processor 110 is connected to the power management module 141, the power management module 141 is further connected to the first terminal of the thirteenth resistor R13 in the second switch circuit 340, and the second terminal of the thirteenth resistor R13 is further connected to the control terminal of the first switch element Q1 and the control terminal of the second switch element Q2. In this case, when the processor 110 detects that the earphone is inserted into the Type-C interface of the electronic device 100, the processor 110 may control the power management module 141 to output the power supply voltage VREG_AUSW_3V3, and the power supply voltage VREG_AUSW_3V3 is then input to the control terminals of the first switch element Q1 and the second switch element Q2 by using the thirteenth resistor R13, to control the first switch element Q1 and the second switch element Q2 to be turned on, so that the path between the first SBU pin and the second switch circuit 340 is connected and the path between the second SBU pin and the second switch circuit 340 is also connected. However, when the processor 110 detects that the charger is inserted into the Type-C interface of the electronic device 100, the processor 110 controls the power management module 141 not to output the power supply voltage VREG_AUSW_3V3 any more. In this case, the first switch element Q1 and the second switch element Q2 are cut off, so that the path between the first SBU pin and the second switch circuit 340 is disconnected, and the path between the second SBU pin and the second switch circuit 340 is also disconnected.

In still another possible implementation, the power management module 141 may be integrated into the processor 110, and the power management module 141 in the processor 110 may be directly connected to the control terminal of the first switch element Q1 and the control terminal of the second switch element Q2. In this case, when the processor 110 detects that the earphone is inserted into the Type-C interface of the electronic device 100, the processor 110 may output the power supply voltage VREG_AUSW_3V3 to the control terminal of the first switch element Q1 and the control terminal of the second switch element Q2 by using the internal power management module 141, to control the first switch element Q1 and the second switch element Q2 to be turned on, so that the path between the first SBU pin and the second switch circuit 340 is connected and the path between the second SBU pin and the second switch circuit 340 is also connected. However, when the processor 110 detects that the charger is inserted into the Type-C interface of the electronic device 100, the processor 110 does not output the power supply voltage VREG_AUSW_3V3 by using the power management module 141 inside the processor. In this case, the first switch element Q1 and the second switch element Q2 are cut off, so that the path between the first SBU pin and the second switch circuit 340 is disconnected, and the path between the second SBU pin and the second switch circuit 340 is also disconnected.

In this embodiment of this application, the audio processing module 170 includes a first audio input pin AU_VIN_P, a second audio input pin AU_VIN_N, and a ground pin AU_REFN. The second switch circuit 340 is further connected to the multiplexing circuit 320 and the ground pin AU_REFN of the audio processing module 170.

The second switch circuit 340 is configured to: when the earphone 200 is obversely inserted into the earphone jack 170D, connect the first SBU pin to the first audio input pin AU_VIN_P by using the multiplexing circuit 320, and connect the second SBU pin to the ground pin AU_REFN. Alternatively, the second switch circuit 340 is configured to: when the earphone 200 is reversely inserted into the earphone jack 170D, connect the second SBU pin to the first audio input pin AU_VIN_P by using the multiplexing circuit 320, and connect the first SBU pin to the ground pin AU_REFN.

In an example in which the earphone jack 170D is the Type-C interface, the earphone 200 may be obversely inserted into the Type-C interface of the electronic device 100, or may be reversely inserted into the Type-C interface of the electronic device 100. Therefore, to enable the electronic device 100 that supports obverse insertion and reverse insertion into the Type-C interface to normally transmit the second audio signal collected by the second microphone in the earphone 200, the second switch circuit 340 needs to be disposed in the audio circuit. When the earphone 200 is obversely inserted into the Type-C interface, the second switch circuit 340 may connect the first SBU pin to the first audio input pin AU_VIN_P by using the multiplexing circuit 320, and connect the second SBU pin to the ground pin AU_REFN. When the earphone 200 is reversely inserted into the Type-C interface, the second switch circuit 340 may connect the second SBU pin to the first audio input pin AU_VIN_P by using the multiplexing circuit 320, and connect the first SBU pin to the ground pin AU_REFN.

As shown in FIG. 5, the second switch circuit 340 includes a switch chip and a protection module connected to the switch chip. The switch chip includes a V+ pin, a COM1 pin, a COM2 pin, an IN1 pin, an IN2 pin, an NC1 pin, an NC2 pin, an NO1 pin, an NO2 pin, and a GND pin. The protection module includes a ninth resistor R9, a tenth resistor R10, an eleventh resistor R11, a twelfth resistor R12, a thirteenth resistor R13, a fourteenth resistor R14, a fifteenth resistor R15, a second bead B2, a third switch element Q3, a thirteenth capacitor C13, a fourteenth capacitor C14, and a fifteenth capacitor C15.

The power management module 141 may be connected to a first terminal of the ninth resistor R9, and a second terminal of the ninth resistor R9 is connected to the V+ pin of the switch chip. A first terminal of the thirteenth capacitor C13 is connected to the second terminal of the ninth resistor R9, and a second terminal of the thirteenth capacitor C13 is connected to a ground terminal GND. The power management module 141 may input a power supply voltage VREG_AUSW_3V3 to the V+ pin of the switch chip, to control the switch chip to work. The ninth resistor R9 and the thirteenth capacitor C13 may form an RC filter circuit, configured to perform filtering processing on the power supply voltage VREG_AUSW_3V3 that is input by the power management module 141 to the V+ pin of the switch chip, to prevent the switch chip from being burnt due to input of a high instantaneous current.

A first terminal of the tenth resistor R10 is connected to the first switch circuit 330. Specifically, the first terminal of the tenth resistor R10 is connected to the second terminal of the second switch element Q2. A second terminal of the tenth resistor R10 is connected to the COM1 pin of the switch chip. A first terminal of the eleventh resistor R11 is connected to the first switch circuit 330. Specifically, the first terminal of the eleventh resistor R11 is connected to the second terminal of the first switch element Q1. A second terminal of the eleventh resistor R11 is connected to the COM2 pin of the switch chip. The tenth resistor R10 and the eleventh resistor R11 are configured to reduce interference caused by a noise signal to a second sound signal.

A first terminal of the twelfth resistor R12 may be connected to the processor 110. A second terminal of the twelfth resistor R12 is connected to the IN1 pin and the IN2 pin of the switch chip. Specifically, the first terminal of the twelfth resistor R12 may be connected to a general purpose input output (general purpose input output, GPIO) pin of the processor 110. The processor 110 may input a control signal GPIO_TYPEC_SW_INT1 to the IN1 pin and the IN2 pin of the switch chip by using the twelfth resistor R12. The control signal GPIO_TYPEC_SW_INT1 is used to control a connection relationship between the COM pins (including the COM1 pin and the COM2 pin) and each of the NC pins (including the NC1 pin and the NC2 pin) and the NO pins (including the NO1 pin and the NO2 pin). The twelfth resistor R12 may prevent the high instantaneous current from being input to the IN1 pin and the IN2 pin of the switch chip, to reduce a possibility that the switch chip is burnt by the high current.

When the processor 110 detects, by using the voltage statuses of the CC1 pin and the CC2 pin in the Type-C interface of the electronic device 100, that the earphone 200 is obversely inserted into the Type-C interface of the electronic device 100, the processor 110 may input a first control signal to the IN1 pin and the IN2 pin of the switch chip by using the twelfth resistor R12. In this case, the first control signal may be a low level signal. The switch chip controls, based on the first control signal, the COM1 pin to be connected to the NC1 pin, and controls the COM2 pin to be connected to the NC2 pin.

The COM1 pin is connected to the second SBU pin in the Type-C interface by using the second switch element Q2, and the NC1 pin of the switch chip is connected to the ground pin AU_REFN of the audio processing module 170 by using devices such as the third switch element Q3, the second bead B2, and the fifteenth resistor R15, so that the second SBU pin in the Type-C interface is connected to the ground pin AU_REFN of the audio processing module 170. In addition, the CMO2 pin is connected to the first SBU pin in the Type-C interface by using the first switch element Q1, the NC2 pin of the switch chip is connected to a earphone audio input terminal HPH_MIC of the multiplexing circuit 320, and the earphone audio input terminal HPH_MIC is further connected to the first audio input pin AU_VIN_P of the audio processing module 170 by using some devices, so that the first SBU pin in the Type-C interface is connected to the first audio input pin AU_VIN_P of the audio processing module 170. The first audio input pin AU_VIN_P is actually a pin that is in the audio processing module 170 and that is used to receive an audio signal collected by a microphone.

When the processor 110 detects, by using the voltage statuses of the CC1 pin and the CC2 pin in the Type-C interface of the electronic device 100, that the earphone 200 is reversely inserted into the Type-C interface of the electronic device 100, the processor 110 may input a second control signal to the IN1 pin and the IN2 pin of the switch chip by using the twelfth resistor R12. In this case, the second control signal may be a high level signal. The switch chip controls, based on the second control signal, the COM1 pin to be connected to the NO1 pin, and controls the COM2 pin to be connected to the NO2 pin.

The COM1 pin is connected to the second SBU pin in the Type-C interface by using the second switch element Q2, the NO1 pin of the switch chip is connected to the earphone audio input terminal HPH_MIC of the multiplexing circuit 320, and the earphone audio input terminal HPH_MIC is further connected to the first audio input pin AU_VIN_P of the audio processing module 170 by using some devices, so that the second SBU pin in the Type-C interface is connected to the first audio input pin AU_VIN_P of the audio processing module 170. In addition, the CMO2 pin is connected to the first SBU pin in the Type-C interface by using the first switch element Q1, and the NO2 pin of the switch chip is connected to the ground pin AU_REFN of the audio processing module 170 by using devices such as the third switch element Q3, the second bead B2, and the fifteenth resistor R15, so that the first SBU pin in the Type-C interface is connected to the ground pin AU_REFN of the audio processing module 170.

The GND pin of the switch chip is connected to a first terminal of the fourteenth resistor R14, and a second terminal of the fourteenth resistor R14 is connected to the ground terminal GND.

The power management module 141 may be further connected to the first terminal of the thirteenth resistor R13, and the second terminal of the thirteenth resistor R13 may be respectively connected to the control terminal of the first switch element Q1, the control terminal of the second switch element Q2, and the control terminal of the third switch element Q3. The thirteenth resistor R13 may prevent the high instantaneous current from being input to the control terminal of the first switch element Q1, the control terminal of the second switch element Q2, and the control terminal of the third switch element Q3, to reduce a possibility that the first switch element Q1, the second switch element Q2, and the third switch element Q3 are burnt by the high current.

A first terminal of the third switch element Q3 is connected to the NC1 pin and the NO2 pin of the switch chip, and a second terminal of the third switch element Q3 is connected to a first terminal of the second bead B2. A second terminal of the second bead B2 is connected to a first terminal of the fifteenth resistor R15, and a second terminal of the fifteenth resistor R15 is connected to the ground pin AU_REFN of the audio processing module 170. A first terminal of the fourteenth capacitor C14 is connected to the first terminal of the second bead B2 and the ground terminal GND, and a second terminal of the fourteenth capacitor C14 is connected to the ground terminal GND. In a possible implementation, the first terminal of the fourteenth capacitor C14 is connected to the ground terminal GND in a single-point grounding manner. A first terminal of the fifteenth capacitor C15 is connected to the second terminal of the second bead B2, and a second terminal of the fifteenth capacitor C15 is connected to the ground terminal GND.

The ground pin AU_REFN is actually a ground pin corresponding to a left channel and a right channel in the audio processing module 170. Therefore, the ground pin corresponding to the microphone in the earphone may be connected to the ground pin corresponding to the left channel and the right channel in the audio processing module 170 by using devices such as the third switch element Q3, the second bead B2, the fifteenth resistor R15, the fourteenth capacitor C14, and the fifteenth capacitor C15.

It should be noted that the third switch element Q3 may be a MOS transistor. Certainly, the third switch element Q3 may alternatively be another suitable controllable device, such as a BJT device or an IGBT device. In an example in which the third switch element Q3 is a MOS transistor, the third switch element Q3 may be an N-type transistor. The control terminal of the third switch element Q3 refers to a gate of the third switch element Q3, the first terminal of the third switch element Q3 refers to a drain of the third switch element Q3, and the second terminal of the third switch element Q3 refers to a source of the third switch element Q3. The third switch element Q3 is turned on when a high level is input at the gate, and is cut off when a low level is input at the gate. Certainly, the third switch element Q3 may alternatively be a P-type transistor, and the third switch element Q3 is turned on when a low level is input at the gate and cut off when a high level is input at the gate.

As shown in FIG. 6, the multiplexing circuit 320 includes a first bias voltage terminal AU_MICBIAS1, a second bias voltage terminal AU_MICBIAS2, a pull-up module 321, and a direct current blocking module 322. A first microphone 310 includes a power pin PWR, a first audio output pin MIC_P, and a second audio output pin MIC_N. The audio processing module 170 includes a first audio input pin AU_VIN_P and a second audio input pin AU_VIN_N.

The first bias voltage terminal AU_MICBIAS1 is connected to the first microphone 310, and is configured to: when no earphone 200 is inserted into the earphone jack 170D, provide a first bias voltage to the first microphone 310, so that the first microphone 310 collects a first audio signal. The first microphone 310 is further connected to the audio processing module 170, and is configured to transmit the first audio signal to the audio processing module 170.

Specifically, the first bias voltage terminal AU_MICBIAS1 is connected to the power pin PWR of the first microphone 310, and the first bias voltage terminal AU_MICBIAS1 is further connected to the processor 110. When the processor 110 detects that no earphone 200 is inserted into the earphone jack 170D and there is a need for collecting an audio signal (that is, the first microphone 310 is required to work), the processor 110 controls the first bias voltage terminal AU_MICBIAS1 to output the first bias voltage, and the processor 110 further disables the second bias voltage terminal AU_MICBIAS2 from outputting a second bias voltage. The first bias voltage is then transmitted to the power pin PWR of the first microphone 310, so that the first microphone 310 can work, and the first microphone 310 may collect the first audio signal.

The first audio signal collected by the first microphone 310 may be transmitted to the audio processing module 170 by using the first audio output pin MIC_P and the second audio output pin MIC_N of the first microphone 310, so as to complete audio reception of the first audio signal.

It should be noted that the first audio output pin MIC_P is actually a P pin that is in the first microphone 310 and that is used to transmit the first audio signal (a differential signal), and the second audio output pin MIC_N is actually an N pin that is in the first microphone 310 and that is used to transmit the first audio signal. An audio transmission channel formed between the first audio output pin MIC_P of the first microphone 310 and the first audio input pin AU_VIN_P of the audio processing module 170 is mainly used to transmit the first audio signal, and an audio transmission channel formed between the second audio output pin MIC_N of the first microphone 310 and the ground terminal GND is mainly intended to reduce interference received during transmission of the first audio signal. The audio channel between the first microphone 310 and the audio processing module 170 may include the audio transmission channel formed between the first audio output pin MIC_P of the first microphone 310 and the first audio input pin AU_VIN_P of the audio processing module 170, and the audio transmission channel formed between the second audio output pin MIC_N of the first microphone 310 and the ground terminal GND.

The pull-up module 321 is respectively connected to the second bias voltage terminal AU_MICBIAS2 and the earphone jack 170D, and is configured to: when a earphone 200 including a second microphone is inserted into the earphone jack 170D, provide, by using the earphone jack 170D, the second microphone with a second bias voltage that is input by the second bias voltage terminal AU_MICBIAS2, so that the second microphone collects the second audio signal.

A first terminal of the direct current blocking module 322 is connected to the earphone jack 170D, a second terminal of the direct current blocking module 322 is connected to the first microphone 310 and the audio processing module 170, and the direct current blocking module 322 is configured to isolate a direct current component in the first audio signal, and transmit the second audio signal that passes through the earphone jack 170D to the audio processing module 170.

Specifically, the second bias voltage terminal AU_MICBIAS2 is further connected to the processor 110. When the processor 110 detects that the earphone 200 is inserted into the earphone jack 170D, the processor 110 controls the second bias voltage terminal AU_MICBIAS2 to output the second bias voltage, and the processor 110 further disables the first bias voltage terminal AU_MICBIAS1 from outputting the first bias voltage. The pull-up module 321 is actually further connected to an audio transmission channel formed between the earphone audio input terminal HPH_MIC and the first audio input pin AU_VIN_P of the audio processing module 170, the earphone audio input terminal HPH_MIC is further connected to the earphone jack 170D by using the second switch circuit 340 and the first switch circuit 330, and the earphone jack 170D is further connected to the second microphone in the earphone 200. Therefore, after the pull-up module 321 pulls up the second bias voltage that is input by the second bias voltage terminal AU_MICBIAS2, the second bias voltage may be transmitted to the second microphone in the earphone 200 by using the earphone audio input terminal HPH_MIC, the second switch circuit 340, the first switch circuit 330, and the earphone jack 170D successively, so that the second microphone can work, and the second microphone can collect the second audio signal.

The first terminal of the direct current blocking module 322 is specifically connected to the earphone jack 170D by using the earphone audio input terminal HPH_MIC, the second switch circuit 340, and the first switch circuit 330. The second audio signal collected by the second microphone in the earphone 200 is transmitted to the first audio input pin AU_VIN_P in the audio processing module 170 by using the earphone jack 170D, the first switch circuit 330, the second switch circuit 340, the earphone audio input terminal HPH_MIC, and the direct current blocking module 322 successively, so as to complete audio reception of the second audio signal.

It should be noted that an audio transmission channel formed between the second microphone in the earphone 200 and the first audio input pin AU_VIN_P in the audio processing module 170 is mainly used to transmit the second audio signal, and an audio transmission channel formed between the second audio output pin MIC_N in the audio processing module 170 and the ground signal terminal AVSS30_AUD is mainly intended to reduce interference received during transmission of the second audio signal. Therefore, it may be learned that the second audio signal and the first audio signal may be transmitted to the audio processing module 170 by sharing a same audio channel, that is, by sharing the first audio input pin AU_VIN_P in the audio processing module 170.

Due to presence of the direct current blocking module 322, the direct current blocking module may isolate the direct current component in the audio signal and allow an alternating current component in the audio signal to pass through. Therefore, the second microphone in the earphone 200 works in an alternating current coupling (AC Coupling, ACC) mode, and the first microphone 310 in the electronic device 100 works in a direct current coupling (DC Coupling, DCC) mode.

It should be noted that the ACC mode means that the direct current blocking module 322 in the multiplexing circuit 320 is coupled to remove the direct current component in the second audio signal collected by the second microphone in the earphone 200, and allow only the alternating current component in the second audio signal to pass through. In other words, when the earphone 200 is inserted into the earphone jack 170D of the electronic device 100 to collect the audio signal, the second audio signal finally transmitted to the audio processing module 170 has only the alternating current component but does not have the direct current component. Correspondingly, the DCC mode means that the direct current component and the alternating current component that are in the first audio signal pass through together. In other words, when the earphone 200 is not inserted into the earphone jack 170D of the electronic device 100, and the audio signal is collected by using the first microphone 310 in the electronic device 100, the first audio signal finally transmitted to the audio processing module 170 includes both the direct current component and the alternating current component.

The direct current component in the first audio signal collected by the first microphone 310 in the electronic device 100 is isolated by the direct current blocking module 322, so that the direct current component in the first audio signal is not transmitted to a side of the first terminal of the direct current blocking module 322, that is, a direct current path between the first microphone 310 and the second microphone in the earphone 200 is isolated. This may prevent the first audio signal collected by the first microphone 310 from leaking to the side of the first terminal of the direct current blocking module 322, that is, prevent the first audio signal collected by the first microphone 310 from leaking to the earphone audio input terminal HPH_MIC, thereby improving strength of the first audio signal collected by the first microphone 310.

As shown in FIG. 6, the multiplexing circuit 320 may further include a first filtering module 323 and a earphone detection module 324.

The first filtering module 323 is respectively connected to the earphone jack 170D, the ground signal terminal AVSS30_AUD, the direct current blocking module 322, and the ground terminal GND, and is configured to perform filtering processing on the second audio signal. Specifically, the first filtering module 323 is connected to the earphone jack 170D by using the earphone audio input terminal HPH_MIC, the second switch circuit 340, and the first switch circuit 330. In a process in which the second audio signal collected by the second microphone in the earphone 200 is transmitted to the direct current blocking module 322 by using the earphone jack 170D, the first switch circuit 330, the second switch circuit 340, and the earphone audio input terminal HPH_MIC, the first filtering module 323 may perform filtering processing on the second audio signal, to reduce interference caused by a noise signal to the second audio signal.

The earphone detection module 324 is respectively connected to the earphone jack 170D and the audio processing module 170, and is configured to detect a earphone type corresponding to the earphone 200 that is inserted into the earphone jack 170D. Specifically, a second terminal of the earphone detection module 324 is connected to the detection pin ACCDET of the audio processing module 170, and a first terminal of the earphone detection module 324 is connected to the earphone jack 170D by using the earphone audio input terminal HPH_MIC, the second switch circuit 340, and the first switch circuit 330. When the earphone type of the earphone 200 inserted into the earphone jack 170D varies, a voltage detected by the detection pin ACCDET of the audio processing module 170 varies. Therefore, the audio processing module 170 determines the earphone type of the earphone 200 inserted into the earphone jack 170D by using the voltage detected by the detection pin ACCDET of the audio processing module. For example, the earphone type includes a three-segment earphone or a four-segment earphone.

In some embodiments, as shown in FIG. 6, the direct current blocking module 322 includes a first capacitor C1 and a second capacitor C2. A first terminal of the first capacitor C1 is connected to the earphone jack 170D, and a second terminal of the first capacitor C1 is connected to the first audio input pin AU_VIN_P. A first terminal of the second capacitor C2 is connected to the ground signal terminal AVSS30_AUD, and a second terminal of the second capacitor C2 is connected to the second audio input pin AU_VIN_N. Specifically, the first terminal of the first capacitor C1 is actually connected to the earphone jack 170D by using the earphone audio input terminal HPH_MIC, the second switch circuit 340, and the first switch circuit 330.

As shown in FIG. 6, the pull-up module 321 includes a first resistor R1 and a second resistor R2. A first terminal of the first resistor R1 is connected to the second bias voltage terminal AU_MICBIAS2, a second terminal of the first resistor R1 is connected to a first terminal of the second resistor R2, and a second terminal of the second resistor R2 is connected to the earphone jack 170D. Specifically, the second terminal of the second resistor R2 is connected to the earphone jack 170D by using the earphone audio input terminal HPH_MIC, the second switch circuit 340, and the first switch circuit 330. In addition, the second terminal of the first resistor R1 and the first terminal of the second resistor R2 are further connected to the first terminal of the second capacitor C2, and the second terminal of the second resistor R2 is further connected to the first terminal of the first capacitor C1.

As shown in FIG. 6, the first filtering module 323 includes a first bead B1, a third capacitor C3, a fourth capacitor C4, a fifth capacitor C5, a sixth capacitor C6, and a seventh capacitor C7.

A first terminal of the first bead B1 is connected to the earphone jack 170D, and a second terminal of the first bead B1 is connected to the first terminal of the first capacitor C1. Specifically, the first terminal of the first bead B1 is connected to the earphone jack 170D by using the earphone audio input terminal HPH_MIC, the second switch circuit 340, and the first switch circuit 330. The first bead B1 may be configured to filter out interference caused by high-frequency interference noise to the second audio signal, to suppress current noise, and may further absorb some electrostatic pulses.

A first terminal of the third capacitor C3 is connected to the first terminal of the first capacitor C1, and a second terminal of the third capacitor C3 is connected to the first terminal of the second capacitor C2. The third capacitor C3 may be referred to as a flying capacitor, and is configured to equalize signal energy of the second audio signal transmitted to the audio processing module 170 on a differential signal line (including the audio transmission channel formed between the second microphone in the earphone 200 and the first audio input pin AU_VIN_P in the audio processing module 170, and the audio transmission channel formed between the second audio output pin MIC_N in the audio processing module 170 and the ground signal terminal AVSS30_AUD).

A first terminal of the fourth capacitor C4 is connected to the second terminal of the first bead B1, and a second terminal of the fourth capacitor C4 is connected to the ground terminal GND. In addition, the first terminal of the fourth capacitor C4 is further connected to the first terminal of the third capacitor C3 and the first terminal of the first capacitor C1. The second terminal of the fourth capacitor C4 may be connected to the ground terminal GND in a single-point grounding manner.

A first terminal of the fifth capacitor C5 is connected to the second terminal of the first bead B1, and a second terminal of the fifth capacitor C5 is connected to the ground terminal GND. In addition, the first terminal of the fifth capacitor C5 is further connected to the first terminal of the third capacitor C3, the first terminal of the first capacitor C1, and the first terminal of the fourth capacitor C4. The second terminal of the fifth capacitor C5 may be connected to the ground terminal GND in a single-point grounding manner.

A first terminal of the sixth capacitor C6 is connected to the ground signal terminal AVSS30_AUD, and a second terminal of the sixth capacitor C6 is connected to the first terminal of the second capacitor C2. In addition, the second terminal of the sixth capacitor C6 is further connected to the second terminal of the first resistor R1, the first terminal of the second resistor R2, and the second terminal of the third capacitor C3. The sixth capacitor C6 and the first resistor R1 may form an RC filter circuit.

A first terminal of the seventh capacitor C7 is connected to the second terminal of the sixth capacitor C6, and a second terminal of the seventh capacitor C7 is connected to the ground terminal GND. In addition, the first terminal of the seventh capacitor C7 is further connected to the second terminal of the first resistor R1, the first terminal of the second resistor R2, the second terminal of the third capacitor C3, and the first terminal of the second capacitor C2. The second terminal of the seventh capacitor C7 may be connected to the ground terminal GND in a single-point grounding manner.

As shown in FIG. 6, the earphone detection module 324 includes a third resistor R3, a first terminal of the third resistor R3 is connected to the earphone jack 170D, and a second terminal of the third resistor R3 is connected to the audio processing module 170. Specifically, the first terminal of the third resistor R3 is connected to the earphone jack 170D by using the first bead B1, the earphone audio input terminal HPH_MIC, the second switch circuit 340, and the first switch circuit 330, and the second terminal of the third resistor R3 is connected to the detection pin ACCDET in the audio processing module 170. In addition, the first terminal of the third resistor R3 is further connected to the second terminal of the second resistor R2, the first terminal of the fourth capacitor C4, the first terminal of the fifth capacitor C5, the first terminal of the third capacitor C3, and the first terminal of the first capacitor C1.

The following description focuses on a specific reason for adding the direct current blocking module 322 to the multiplexing circuit 320.

It is assumed that both the first microphone 310 and the second microphone in the earphone 200 work in a DCC mode, and both the first capacitor C1 and the second capacitor C2 in the direct current blocking module 322 need to be replaced with a 0-Ω resistor. In this case, when the first microphone 310 works, the direct current component in the first audio signal that is output by the first audio output pin MIC_P of the first microphone 310 leaks by using the 0-Ω resistor that replaces the first capacitor C1 and the second capacitor C2.

Leakage paths include the following several leakage paths. First leakage path: The direct current component in the first audio signal that is output by the first audio output pin MIC_P of the first microphone 310 is transmitted to the second bias voltage terminal AU_MICBIAS2 by using the 0-Ω resistor that replaces the first capacitor C1, the second resistor R2, and the first resistor R1 successively, to form leakage at the second bias voltage terminal AU_MICBIAS2. Second leakage path: The direct current component in the first audio signal that is output by the first audio output pin MIC_P of the first microphone 310 is transmitted to the detection pin ACCDET in the audio processing module 170 by using the 0-Ω resistor that replaces the first capacitor C1 and the third resistor R3 successively. Because the detection pin ACCDET is in a low impedance state relative to the ground terminal, leakage is formed at the detection pin ACCDET. Third leakage path: The direct current component in the first audio signal that is output by the first audio output pin MIC_P of the first microphone 310 is transmitted to the second audio input pin AU_VIN_N in the audio processing module 170 by using the 0-Ω resistor that replaces the first capacitor C1, the second resistor R2, and the 0-Ω resistor that replaces the second capacitor C2 successively, to form leakage at the second audio input pin AU_VIN_N. Fourth leakage path: The direct current component in the first audio signal output by the first audio output pin MIC_P of the first microphone 310 is transmitted to the power management module 141 by using the 0-Ω resistor that replaces the first capacitor C1, the first bead B1, the earphone audio input terminal HPH_MIC, the NC2 pin (or the NO1 pin) of the switch chip, and the V+ pin of the switch chip successively. The power management module 141 also has a ground pin to form leakage.

In conclusion, it may be learned that, it is assumed that both the first microphone 310 and the second microphone in the earphone 200 work in the DCC mode. After both the first capacitor C1 and the second capacitor C2 in the direct current blocking module 322 are replaced with the 0-Ω resistor, the direct current component in the first audio signal that is output by the first microphone 310 leaks through these leakage paths, and consequently, signal strength of the direct current component in the first audio signal that is output by the first microphone 310 is pulled down, and a problem of a low volume of the collected first audio signal occurs. Therefore, in this embodiment of this application, the second microphone in the earphone 200 uses the ACC mode, the first microphone 310 uses the DCC mode, and the direct current blocking module 322 including the first capacitor C1 and the second capacitor C2 is used to isolate the direct current component in the first audio signal collected by the first microphone 310, to prevent leakage of the direct current component in the first audio signal collected by the first microphone 310. This prevents the signal strength of the direct current component in the first audio signal that is output by the first microphone 310 from being pulled down, and increases a volume in the first audio signal that is output by the first microphone 310.

In some embodiments, a capacitance value of the first capacitor C1 is 54 nF to 796 nF.

In a product design process, when the first audio signal is collected by using the first microphone 310, it is found that a high-frequency alternating current component in the first audio signal starts to drop from approximately 1 KHz, and drops by 12 dB or more at 10 kHz. Based on analysis, because the detection pin ACCDET in the audio processing module 170 is in the low impedance state relative to the ground terminal, the high-frequency alternating current component in the first audio signal may form RC filtering by using a small impedance between the ground terminal and each of the first capacitor C1, the third resistor R3, and the detection pin ACCDET, resulting in a leakage problem of the high-frequency alternating current component in the first audio signal when passing through a leakage path that is formed by the first capacitor C1, the third resistor R3, and the detection pin ACCDET, and causing a drop of the high-frequency alternating current component in the first audio signal.

Based on the foregoing description, in this embodiment of this application, the capacitance value of the first capacitor C1 is properly set, and the capacitance value of the first capacitor C1 is set to 54 nF to 796 nF, to reduce a leakage degree of the high-frequency alternating current component in the first audio signal from the leakage path that is formed by the first capacitor C1, the third resistor R3, and the detection pin ACCDET, and reduce a drop degree of the high-frequency alternating current component in the first audio signal.

It should be noted that, a rule for selecting the capacitance value of the first capacitor C1 is as follows: It needs to be ensured that the high-frequency alternating current component of the first audio signal collected by the first microphone 310 leaks less from the leakage path that is formed by the first capacitor C1, the third resistor R3, and the detection pin ACCDET, and it needs to be further ensured that the second audio signal collected by the second microphone in the earphone 200 can be normally transmitted to the audio processing module 170 by using the first capacitor C1, and a sound test indicator of the second audio signal is normal.

The sound test indicator being normal means that attenuation of the audio signal in a specific frequency range does not exceed 5 dB. The frequency range may be 200 Hz to 10 kHz.

Based on the test, an internal equivalent impedance to ground of the detection pin ACCDET is approximately 20 Ω, and an internal equivalent impedance to ground of the first audio input pin AU_VIN_P of the audio processing module 170 is approximately 10 kΩ. Therefore, after the capacitance value of the first capacitor C1 is set to 54 nF to 796 nF, the attenuation of the high-frequency alternating current component of 200 Hz to 10 kHz in the second audio signal collected by the second microphone in the earphone 200 is within 5 dB, and the high-frequency alternating current component of 200 Hz to 10 kHz in the first audio signal collected by the first microphone 310 is in a stopband of the leakage path, so that the high-frequency alternating current component in the first audio signal is located between cut-off frequencies f1 and f2 of the leakage path. f1 may be 200 Hz and f2 may be 10 kHz. In other words, the high-frequency alternating current component of 200 Hz to 10 kHz in the first audio signal does not pass through the first capacitor C1, but the high-frequency alternating current component of 200 Hz to 10 kHz in the second audio signal may normally pass through the first capacitor C1.

It should be noted that the capacitance value of the first capacitor C1 is set to 54 nF to 796 nF. This parameter is a theoretically calculated value. Certainly, in an actual circuit, there may alternatively exist impact from another parasitic parameter, causing the capacitance value of the first capacitor C1 to change to some extent. In some embodiments, a capacitor of 100 nF may be selected as the first capacitor C1 to meet an audio test standard.

Further, as shown in FIG. 6, the multiplexing circuit 320 further includes a second filtering module 325 and a third filtering module 326. The second filtering module 325 is respectively connected to the first bias voltage terminal AU_MICBIAS1, the first microphone 310, and the ground terminal GND, and is configured to perform filtering processing on the first bias voltage that is input by the first bias voltage terminal AU_MICBIAS1. The third filtering module 326 is respectively connected to the first microphone 310, the audio processing module 170, and the ground terminal GND, and is configured to perform filtering processing on the first audio signal collected by the first microphone 310.

The first microphone 310 includes a power pin PWR, a first audio output pin MIC_P, and a second audio output pin MIC_N. The audio processing module 170 includes a first audio input pin AU_VIN_P and a second audio input pin AU_VIN_N. Specifically, the second filtering module 325 is actually connected to the power pin PWR of the first microphone 310. The third filtering module 326 is actually connected to the first audio output pin MIC_P and the second audio output pin MIC_N of the first microphone 310, and the third filtering module 326 is actually connected to the first audio input pin AU_VIN_P of the audio processing module 170.

The second filtering module 325 includes a first bidirectional voltage regulator diode D1, an eighth capacitor C8, a ninth capacitor C9, and a first inductor L1.

A first terminal of the first bidirectional voltage regulator diode D1 is connected to the first bias voltage terminal AU_MICBIAS1, and a second terminal of the first bidirectional voltage regulator diode D1 is connected to the ground terminal GND. The first bidirectional voltage regulator diode D1 consists of two voltage regulator diodes whose negative electrodes are connected to each other, and positive electrodes of the two voltage regulator diodes are respectively used as the first terminal and the second terminal of the first bidirectional voltage regulator diode D1. The first bidirectional voltage regulator diode D1 is configured to prevent interference caused by electro-static discharge (electro-static discharge, ESD) to the first bias voltage that is input by the first bias voltage terminal AU_MICBIAS1.

A first terminal of the first inductor L1 is connected to the first bias voltage terminal AU_MICBIAS1, and a second terminal of the first inductor L1 is connected to the power pin PWR of the first microphone 310. In addition, the first terminal of the first inductor L1 is further connected to the first terminal of the first bidirectional voltage regulator diode D1.

A first terminal of the eighth capacitor C8 is connected to the first terminal of the first inductor L1, and a second terminal of the eighth capacitor C8 is connected to the ground terminal GND. In addition, the first terminal of the eighth capacitor C8 is further respectively connected to the first bias voltage terminal AU_MICBIAS1 and the first terminal of the first bidirectional voltage regulator diode D1.

A first terminal of the ninth capacitor C9 is connected to the second terminal of the first inductor L1, and a second terminal of the ninth capacitor C9 is connected to the ground terminal GND. In addition, the first terminal of the ninth capacitor C9 is further connected to the power pin PWR of the first microphone 310.

The third filtering module 326 includes a second bidirectional voltage regulator diode D2, a fourth resistor R4, a fifth resistor R5, a sixth resistor R6, a tenth capacitor C10, an eleventh capacitor C11, and a twelfth capacitor C12.

A first terminal of the second bidirectional voltage regulator diode D2 is connected to the audio processing module 170, and a second terminal of the second bidirectional voltage regulator diode D2 is connected to the ground terminal GND. Specifically, the first terminal of the second bidirectional voltage regulator diode D2 is connected to the first audio input pin AU_VIN_P of the audio processing module 170. The second bidirectional voltage regulator diode D2 consists of two voltage regulator diodes whose negative electrodes are connected to each other, and positive electrodes of the two voltage regulator diodes are respectively used as the first terminal and the second terminal of the second bidirectional voltage regulator diode D2. The second bidirectional voltage regulator diode D2 is configured to prevent interference caused by electro-static discharge to the first audio signal that is output by the first microphone 310.

A first terminal of the fourth resistor R4 is connected to the audio processing module 170, and a second terminal of the fourth resistor R4 is connected to the first audio output pin MIC_P of the first microphone 310. Specifically, the first terminal of the fourth resistor R4 is connected to the first audio input pin AU_VIN_P of the audio processing module 170. In addition, the first terminal of the fourth resistor R4 is further connected to the first terminal of the second bidirectional voltage regulator diode D2.

A first terminal of the fifth resistor R5 is connected to the ground terminal GND, and a second terminal of the fifth resistor R5 is connected to the second audio output pin MIC_N of the first microphone 310.

A first terminal of the sixth resistor R6 is connected to the second audio output pin MIC_N of the first microphone 310, and a second terminal of the sixth resistor R6 is connected to the ground terminal GND. In addition, the first terminal of the sixth resistor R6 is further connected to the second terminal of the fifth resistor R5.

A first terminal of the tenth capacitor C10 is connected to the first terminal of the fourth resistor R4, and a second terminal of the tenth capacitor C10 is connected to the first terminal of the fifth resistor R5. The tenth capacitor C10 may be referred to as a flying capacitor, and is configured to equalize signal energy of the first audio signal transmitted to the audio processing module 170 on a differential signal line (including an audio transmission channel formed between the first audio output pin MIC_P of the first microphone 310 and the first audio input pin AU_VIN_P in the audio processing module 170, and an audio transmission channel formed between the second audio output pin MIC_N of the first microphone 310 and the ground terminal GND). In addition, the first terminal of the tenth capacitor C10 is further connected to the first terminal of the second bidirectional voltage regulator diode D2.

A first terminal of the eleventh capacitor C11 is connected to the first terminal of the fourth resistor R4, and a second terminal of the eleventh capacitor C11 is connected to the ground terminal GND. In addition, the first terminal of the eleventh capacitor C11 is further connected to the first terminal of the second bidirectional voltage regulator diode D2 and the first terminal of the tenth capacitor C10.

A first terminal of the twelfth capacitor C12 is connected to the first terminal of the fifth resistor R5, and a second terminal of the twelfth capacitor C12 is connected to the ground terminal GND. In addition, the first terminal of the twelfth capacitor C12 is further connected to the second terminal of the tenth capacitor C10.

In addition, as shown in FIG. 6, the multiplexing circuit 320 further includes a test-purpose module 327. The test-purpose module 327 is some modules to be used in an audio signal quality debugging process. After the test is completed, a device in the test-purpose module 327 is retained in the audio circuit.

The test-purpose module 327 includes a seventh resistor R7 and an eighth resistor R8. A first terminal of the seventh resistor R7 is connected to the first audio input pin AU_VIN_P in the audio processing module 170, and a second terminal of the seventh resistor R7 is respectively connected to the first terminal of the second bidirectional voltage regulator diode D2, the first terminal of the eleventh capacitor C11, the first terminal of the tenth capacitor C10, and the first terminal of the fourth resistor R4. A first terminal of the eighth resistor R8 is respectively connected to the second terminal of the tenth capacitor C10, the first terminal of the twelfth capacitor C12, and the first terminal of the fifth resistor R5. A second terminal of the eighth resistor R8 is connected to the ground terminal GND.

It may be understood that, in this embodiment of this application, a device connected to the ground terminal GND may be grounded in a single-point grounding manner, or may be directly grounded, and the ground terminal GND may be a digital ground (DGND), an analog ground (AGND), or the like. In addition, "connection" in this embodiment of this application is "electrical connection", and a connection between two devices or modules may be a direct connection, or indirect connection by using another device or module.

An embodiment of this application may further provide a method for controlling an audio circuit, and the method is applied to controlling the audio circuit shown in FIG. 5 and FIG. 6.

In an actual working process, the processor 110 may detect whether the earphone 200 is inserted into the earphone jack 170D. When the earphone 200 is not inserted into the earphone jack 170D, the first bias voltage terminal AU_MICBIAS1 provides the first bias voltage to the first microphone 310. The first microphone 310 collects the first audio signal based on the first bias voltage, and transmits the first audio signal to the audio processing module 170. When the earphone 200 is inserted into the earphone jack 170D, the pull-up module 321 provides, by using the earphone jack 170D, the second bias voltage that is input by the second bias voltage terminal AU_MICBIAS2 to the second microphone in the earphone 200. The second bias voltage is used to control the second microphone to collect the second audio signal, and the second audio signal is transmitted to the audio processing module 170 by using the earphone jack 170D and the direct current blocking module 322 successively.

In addition, the processor 110 may further detect a type of a device inserted into the earphone jack 170D. When the charger is inserted into the earphone jack 170D, the first switch circuit 330 controls the first SBU pin and the second SBU pin to be disconnected from the second switch circuit 340. When the earphone 200 is inserted into the earphone jack 170D, the first switch circuit 330 controls the first SBU pin and the second SBU pin to be connected to the second switch circuit 340.

In this embodiment of this application, in addition to including the foregoing audio circuit, the electronic device 100 may further include another device, such as a battery or a power management module. For specific composition of the electronic device 100, refer to the corresponding description of FIG. 2. Details are not described herein again.

The objectives, technical solutions, and beneficial effects of this application are further described in detail in the foregoing specific implementations. It should be understood that the foregoing descriptions are merely specific implementations of this application, but are not intended to limit the protection scope of this application. Any modification, equivalent replacement, or improvement made based on the technical solutions of this application shall fall within the protection scope of this application.

## Claims

1. An audio circuit, comprising a earphone jack, a first microphone, an audio processing module, and a multiplexing circuit, wherein the multiplexing circuit comprises a first bias voltage terminal, a second bias voltage terminal, a pull-up module, and a direct current blocking module;
the first bias voltage terminal is connected to the first microphone, and is configured to: when no earphone is inserted into the earphone jack, provide a first bias voltage to the first microphone, so that the first microphone collects a first audio signal;
the first microphone is further connected to the audio processing module, and is configured to transmit the first audio signal to the audio processing module;
the pull-up module is respectively connected to the second bias voltage terminal and the earphone jack, and is configured to: when a earphone comprising a second microphone is inserted into the earphone jack, provide, by using the earphone jack, a second bias voltage that is input by the second bias voltage terminal to the second microphone, so that the second microphone collects a second audio signal; and
a first terminal of the direct current blocking module is connected to the earphone jack, a second terminal of the direct current blocking module is connected to the first microphone and the audio processing module, and the direct current blocking module is configured to isolate a direct current component in the first audio signal, and transmit the second audio signal that passes through the earphone jack to the audio processing module.

2. The audio circuit according to claim 1, wherein the audio processing module comprises a first audio input pin and a second audio input pin, and the direct current blocking module comprises a first capacitor and a second capacitor;
a first terminal of the first capacitor is connected to the earphone jack, and a second terminal of the first capacitor is connected to the first audio input pin; and
a first terminal of the second capacitor is connected to a ground signal terminal, and a second terminal of the second capacitor is connected to the second audio input pin.

3. The audio circuit according to claim 2, wherein a capacitance value of the first capacitor is 54 nF to 796 nF.

4. The audio circuit according to claim 1, wherein the pull-up module comprises a first resistor and a second resistor; and
a first terminal of the first resistor is connected to the second bias voltage terminal, a second terminal of the first resistor is connected to a first terminal of the second resistor, and a second terminal of the second resistor is connected to the earphone jack.

5. The audio circuit according to claim 2, wherein the multiplexing circuit further comprises a first filtering module, and the first filtering module is respectively connected to the earphone jack, the ground signal terminal, the direct current blocking module, and a ground terminal, and is configured to perform filtering processing on the second audio signal.

6. The audio circuit according to claim 5, wherein the first filtering module comprises a first bead, a third capacitor, a fourth capacitor, a fifth capacitor, a sixth capacitor, and a seventh capacitor;
a first terminal of the first bead is connected to the earphone jack, and a second terminal of the first bead is connected to the first terminal of the first capacitor;
a first terminal of the third capacitor is connected to the first terminal of the first capacitor, and a second terminal of the third capacitor is connected to the first terminal of the second capacitor;
a first terminal of the fourth capacitor is connected to the second terminal of the first bead, and a second terminal of the fourth capacitor is connected to the ground terminal;
a first terminal of the fifth capacitor is connected to the second terminal of the first bead, and a second terminal of the fifth capacitor is connected to the ground terminal;
a first terminal of the sixth capacitor is connected to the ground signal terminal, and a second terminal of the sixth capacitor is connected to the first terminal of the second capacitor; and
a first terminal of the seventh capacitor is connected to the second terminal of the sixth capacitor, and a second terminal of the seventh capacitor is connected to the ground terminal.

7. The audio circuit according to claim 1, wherein the multiplexing circuit further comprises a earphone detection module, and the earphone detection module is respectively connected to the earphone jack and the audio processing module to detect a earphone type corresponding to the earphone that is inserted into the earphone jack.

8. The audio circuit according to claim 7, wherein the earphone detection module comprises a third resistor, a first terminal of the third resistor is connected to the earphone jack, and a second terminal of the third resistor is connected to the audio processing module.

9. The audio circuit according to claim 1, wherein the multiplexing circuit further comprises a second filtering module and a third filtering module;
the second filtering module is respectively connected to the first bias voltage terminal, the first microphone, and a ground terminal, and is configured to perform filtering processing on the first bias voltage that is input by the first bias voltage terminal; and
the third filtering module is respectively connected to the first microphone, the audio processing module, and the ground terminal, and is configured to perform filtering processing on the first audio signal collected by the first microphone.

10. The audio circuit according to claim 9, wherein the first microphone comprises a power pin, and the second filtering module comprises a first bidirectional voltage regulator diode, an eighth capacitor, a ninth capacitor, and a first inductor;
a first terminal of the first bidirectional voltage regulator diode is connected to the first bias voltage terminal, and a second terminal of the first bidirectional voltage regulator diode is connected to the ground terminal;
a first terminal of the first inductor is connected to the first bias voltage terminal, and a second terminal of the first inductor is connected to the power pin;
a first terminal of the eighth capacitor is connected to the first terminal of the first inductor, and a second terminal of the eighth capacitor is connected to the ground terminal; and
a first terminal of the ninth capacitor is connected to the second terminal of the first inductor, and a second terminal of the ninth capacitor is connected to the ground terminal.

11. The audio circuit according to claim 9, wherein the first microphone comprises a first audio output pin and a second audio output pin, and the third filtering module comprises a second bidirectional voltage regulator diode, a fourth resistor, a fifth resistor, a sixth resistor, a tenth capacitor, an eleventh capacitor, and a twelfth capacitor;
a first terminal of the second bidirectional voltage regulator diode is connected to the audio processing module, and a second terminal of the second bidirectional voltage regulator diode is connected to the ground terminal;
a first terminal of the fourth resistor is connected to the audio processing module, and a second terminal of the fourth resistor is connected to the first audio output pin;
a first terminal of the fifth resistor is connected to the ground terminal, and a second terminal of the fifth resistor is connected to the second audio output pin;
a first terminal of the sixth resistor is connected to the second audio output pin, and a second terminal of the sixth resistor is connected to the ground terminal;
a first terminal of the tenth capacitor is connected to the first terminal of the fourth resistor, and a second terminal of the tenth capacitor is connected to the first terminal of the fifth resistor;
a first terminal of the eleventh capacitor is connected to the first terminal of the fourth resistor, and a second terminal of the eleventh capacitor is connected to the ground terminal; and
a first terminal of the twelfth capacitor is connected to the first terminal of the fifth resistor, and a second terminal of the twelfth capacitor is connected to the ground terminal.

12. The audio circuit according to any one of claims 1 to 11, wherein the earphone jack comprises a first SBU pin and a second SBU pin, and the audio processing module comprises a first audio input pin, a second audio input pin, and a ground pin;
the audio circuit further comprises a first switch circuit and a second switch circuit, the first switch circuit is respectively connected to the first SBU pin, the second SBU pin, and the second switch circuit, and the second switch circuit is further connected to the multiplexing circuit and the ground pin;
the first switch circuit is configured to: when a charger is inserted into the earphone jack, control the first SBU pin and the second SBU pin to be disconnected from the second switch circuit; and when the earphone is inserted into the earphone jack, control the first SBU pin and the second SBU pin to be connected to the second switch circuit;
the second switch circuit is configured to: when the earphone is obversely inserted into the earphone jack, connect the first SBU pin to the first audio input pin by using the multiplexing circuit, and connect the second SBU pin to the ground pin; or
the second switch circuit is configured to: when the earphone is reversely inserted into the earphone jack, connect the second SBU pin to the first audio input pin by using the multiplexing circuit, and connect the first SBU pin to the ground pin.

13. The audio circuit according to claim 12, wherein the audio circuit further comprises a processor, and the first switch circuit comprises a first switch element and a second switch element;
a control terminal of the first switch element is connected to the processor, a first terminal of the first switch element is connected to the first SBU pin, and a second terminal of the first switch element is connected to the second switch circuit; and
a control terminal of the second switch element is connected to the processor, a first terminal of the second switch element is connected to the second SBU pin, and a second terminal of the second switch element is connected to the second switch circuit.

14. A method for controlling an audio circuit, wherein the method is applied to controlling the audio circuit according to any one of claims 1 to 13, and the method comprises:
detecting whether a earphone is inserted into a earphone jack;
when no earphone is inserted into the earphone jack, providing, by a first bias voltage terminal, a first bias voltage to a first microphone;
collecting, by the first microphone, a first audio signal based on the first bias voltage, and transmitting the first audio signal to an audio processing module; and
when a earphone is inserted into the earphone jack, providing, by a pull-up module by using the earphone jack, a second bias voltage that is input by a second bias voltage terminal to a second microphone in the earphone, wherein
the second bias voltage is used to control the second microphone to collect a second audio signal, and the second audio signal is transmitted to the audio processing module by using the earphone jack and a direct current blocking module successively.

15. The audio circuit according to claim 14, wherein the earphone jack comprises a first SBU pin and a second SBU pin, the audio processing module comprises a first audio input pin, a second audio input pin, and a ground pin, the audio circuit further comprises a first switch circuit and a second switch circuit, the first switch circuit is respectively connected to the first SBU pin, the second SBU pin, and the second switch circuit, and the second switch circuit is further connected to a multiplexing circuit and the ground pin; and the method further comprises:
detecting a type of a device inserted into the earphone jack;
when a charger is inserted into the earphone jack, controlling, by the first switch circuit, the first SBU pin and the second SBU pin to be disconnected from the second switch circuit; and
when the earphone is inserted into the earphone jack, controlling, by the first switch circuit, the first SBU pin and the second SBU pin to be connected to the second switch circuit.

16. An electronic device, comprising the audio circuit according to any one of claims 1 to 13.

17. An audio system, comprising a earphone and the electronic device according to claim 16, wherein a second microphone is disposed in the earphone; and
when the earphone is inserted into a earphone jack of the electronic device, the second microphone is configured to send a collected second audio signal to the electronic device.
